# EUROPEAN PATENT APPLICATION

(11) **EP 4 429 372 A1**
(43) Date of publication of application: **11.09.2024**
(21) Application number: 22900437.9
(22) Date of filing: 28.11.2022
(51) Int. Cl.: H04W 72/04

(54) **COMMUNICATION METHOD AND APPARATUS**

(30) Priority: 02.12.2021 CN 202111461301
(71) Applicant: Huawei Technologies Co., Ltd., Shenzhen, Guangdong 518129 (CN)
(72) Inventor: LI, Zhongfeng, Shenzhen, Guangdong 518129 (CN); ZHANG, Zhang, Shenzhen, Guangdong 518129 (CN); FENG, Qi, Shenzhen, Guangdong 518129 (CN)
(74) Representative: Maiwald GmbH
(86) International application number: PCT/CN2022/134777
(87) International publication number: WO 2023/098633

(57) **Abstract**

A communication method and apparatus are provided. The method includes: A first communication apparatus obtains a first time-frequency resource and a first beam, where the first beam is used for sensing; the first communication apparatus sends the first beam on the first time-frequency resource; the first communication apparatus determines a target beam based on a reflected beam of the first beam, wherein the target beam corresponds to a first beam on which the reflected beam is received; and the first communication apparatus determines a second time-frequency resource based on the target beam.

## Description

### CROSS-REFERENCE TO RELATED APPLICATIONS

This application claims priority to Chinese Patent Application No. 202111461301.0, filed with the China National Intellectual Property Administration on December 2, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

In sidelink communication of a current 3^{rd} generation partner technology (3^{rd} generation partnership project, 3GPP), a communication apparatus performs communication by using a listen-before-talk (listen before talk, LBT) mechanism. In other words, the communication apparatus first performs passive listening, and then performs resource selection and communication transmission based on information obtained through listening.

With evolution of a wireless communication system, a frequency supported by a communication system gradually increases. Therefore, a path loss gradually increases, leading to a gradual decrease in coverage. To maintain a specific degree of coverage, impact of path loss needs to be reduced. One way is to increase a transmission power. However, the transmission power is limited by a device size, energy loss, and a radiation indicator.

Therefore, how to increase coverage becomes a problem to be resolved urgently.

### SUMMARY

Embodiments of this application provide a communication method and apparatus, to increase coverage and improve transmission performance.

According to a first aspect, a communication method is provided. The method may be performed by a first communication apparatus. The first communication apparatus may be a network device or a terminal device. In the method, the first communication apparatus obtains a first time-frequency resource and a first beam, where the first beam is used for sensing. The first communication apparatus sends the first beam on the first time-frequency resource. The first communication apparatus determines a target beam based on a reflected beam of the first beam. The target beam corresponds to a first beam on which the reflected beam is received. The first communication apparatus determines a second time-frequency resource based on the target beam.

Based on the foregoing solution, the first communication apparatus may perform active sensing based on the first beam, to determine a target direction, so that a frequency reuse gain can be obtained, coverage can be increased, interference can be reduced, and transmission performance is improved. Because active sensing is used, blind beam scanning for a broadcast service can be reduced, overheads and network interference can be reduced, and energy consumption of the first communication apparatus can also be reduced.

In a possible implementation, the target beam is used for competitive resource selection. For example, the first communication apparatus may listen to first information on the target beam, for example, control information, a reference signal, and data. The first communication apparatus may determine an occupied time-frequency resource based on the first information, so that the first communication apparatus may determine an available time-frequency resource.

Based on the foregoing solution, the first communication apparatus performs competitive resource selection by using the target beam, to determine an occupied time-frequency resource. Therefore, interference to data transmission of the first communication apparatus can be reduced.

In a possible implementation, the first communication apparatus listens to the first information in a first time window. The first information is used for determining an occupied third time-frequency resource. The first time-frequency resource herein does not include the third time-frequency resource. For example, the first time-frequency resource is an unoccupied time-frequency resource, that is, an available time-frequency resource. Alternatively, the first time-frequency resource includes some or all time-frequency resources of the third time-frequency resource. For example, the first time-frequency resource may include a time-frequency resource occupied by a service whose priority is lower than a first threshold, or the first time-frequency resource may include a third time-frequency resource whose energy is lower than a second threshold.

Based on the foregoing solution, the first communication apparatus determines the first time-frequency resource by listening to the first information, so that interference caused by another communication apparatus to the first communication apparatus can be reduced, or interference caused by information transmitted by another communication apparatus to the first beam can be reduced.

In a possible implementation, the first beam is a pre-configured beam. For example, the first beam includes at least one of a synchronization beam and a pilot beam. Optionally, the first beam may be a predefined beam, and a maximum quantity of first beams may be defined at different frequencies.

In a possible implementation, the first communication apparatus listens to the first information in the first time window based on a second beam. The second beam corresponds to the first beam. For example, the second beam is in a one-to-one correspondence with the first beam, or one second beam corresponds to a plurality of first beams.

Based on the foregoing solution, the first communication apparatus determines the first time-frequency resource by listening to the first information based on the second beam, so that interference caused by another communication apparatus to the first communication apparatus can be reduced, or interference caused by information transmitted by another communication apparatus to the first beam can be reduced.

In a possible implementation, a second beam on which the first information is not detected corresponds to the first beam. For example, a second beam on which the first information is not detected is in a one-to-one correspondence with the first beam, or one second beam on which the first information is not detected corresponds to a plurality of first beams.

Based on the foregoing solution, the first communication apparatus listens to the first information based on the second beam, to determine the first beam used for sensing. In this way, a quantity of first beams can be reduced. In other words, a delay of sensing performed by the first communication apparatus based on the first beam can be reduced.

In a possible implementation, the first time-frequency resource is located in a second time window in time domain. The first time window and the second time window alternately appear in time domain. Alternatively, the first time window is located before the second time window in time domain.

Based on the foregoing solution, if the first time window and the second time window alternately appear, that is, the first beam is determined by listening to the first information based on the second beam, a quantity of first beams can be reduced. In other words, a delay of sensing performed by the first communication apparatus based on the first beam can be reduced. If the first time window and the second time window alternately appear in time domain, that is, the first communication apparatus first listens to the first information based on all second beams, and then performs active sensing based on all first beams, active sensing performance can be improved. In other words, the first communication apparatus may detect a potential target by using all the first beams.

In a possible implementation, a length of the first time window is directly proportional to a quantity of second beams, and/or a length of the second time window is directly proportional to a quantity of first beams.

Based on the foregoing solution, the first communication apparatus may have sufficient time to perform listening based on the second beam, send the first beam, and listen to the reflected beam of the first beam.

In a possible implementation, the first communication apparatus listens to the first information based on the target beam. The first information is used for determining the occupied third time-frequency resource. The second time-frequency resource does not include the third time-frequency resource. For example, the second time-frequency resource includes an unoccupied time-frequency resource, that is, an available time-frequency resource. Alternatively, the second time-frequency resource includes some or all time-frequency resources of the third time-frequency resource. For example, the second time-frequency resource may include a time-frequency resource occupied by a service whose priority is lower than a first threshold, or the second time-frequency resource may include a third time-frequency resource whose energy is lower than a second threshold.

Based on the foregoing solution, the first communication apparatus may determine an occupied time-frequency resource by listening to the first information based on the target beam. Therefore, interference to data transmission of the first communication apparatus can be reduced.

In a possible implementation, a time window is related to a priority of a service. The time window herein may include one or more of the first time window and the second time window. For example, a high priority may be configured with a relatively short length, and a low priority may be configured with a relatively long length.

Based on the foregoing solution, time windows of different lengths are configured based on priorities of services, so that requirements of different services can be met.

In a possible implementation, the second time-frequency resource is used for communication. For example, the first communication apparatus may transmit control information, a reference signal, data, and the like on the second time-frequency resource.

Based on the foregoing solution, the first communication apparatus performs active sensing based on the first beam, to determine a target direction, and determines, by using the target beam, the second time-frequency resource used for communication, so that coverage can be increased, interference can be reduced, and transmission performance is improved.

In a possible implementation, at least one of the following is randomly selected: the first time-frequency resource and the second time-frequency resource.

Based on the foregoing solution, the first communication apparatus randomly selects the first time-frequency resource to send the first beam, so that a delay of determining the first time-frequency resource can be reduced. Similarly, the first communication apparatus randomly selects the second time-frequency resource, so that a delay of determining the second time-frequency resource can be reduced.

In a possible implementation, a frequency of the first time-frequency resource is different from a frequency of the second time-frequency resource. For example, the first time-frequency resource and the second time-frequency resource are located on different carriers, or the first time-frequency resource and the second time-frequency resource are located on different frequency bands. For example, a frequency of a carrier on which the first time-frequency resource is located is higher than a frequency of a carrier on which the second time-frequency resource is located. Alternatively, a frequency of a frequency band on which the first time-frequency resource is located is higher than a frequency of a frequency band on which the second time-frequency resource is located. In embodiments of this application, the frequency band may include one or more frequency domain resources.

Based on the foregoing solution, the first beam is sent by using the first time-frequency resource, and the second time-frequency resource is determined based on the target beam. Because the first time-frequency resource and the second time-frequency resource are located on different frequencies, that is, active sensing may be performed by using a time-frequency resource with a relatively high frequency, and passive sensing may be performed by using a time-frequency resource with a relatively low frequency, a delay of an active sensing process can be reduced.

According to a second aspect, a communication method is provided. The method may be performed by a second communication apparatus, and the second communication apparatus may be a network device or a terminal device. In the method, the second communication apparatus sends indication information of a third beam to a third communication apparatus. The third beam is used for at least one of the following: communication by the third communication apparatus and sensing by the third communication apparatus. The second communication apparatus obtains a measurement result based on the third beam. The second communication apparatus sends indication information of a target beam to the third communication apparatus and a fourth communication apparatus. The target beam is determined based on the measurement result, the target beam corresponds to the third beam, and the target beam is used for communication between the third communication apparatus and the fourth communication apparatus.

Based on the foregoing solution, because the indication information of the third beam is sent by the second communication apparatus to the third communication apparatus, the third communication apparatus does not need to perform sensing on a configured beam set. In other words, the third communication apparatus may not need to perform blind scanning on the configured beam set, to determine the target beam. This can reduce overheads of the third communication apparatus, and reduce energy consumption of the third communication apparatus.

In a possible implementation, the second communication apparatus sends indication information of a first time-frequency resource to the third communication apparatus. The first time-frequency resource is used for transmitting the third beam.

Based on the foregoing solution, the second communication apparatus sends, to the third communication apparatus, the first time-frequency resource used for transmitting the third beam, so that interference to the third beam can be reduced, and the third communication apparatus does not need to determine the first time-frequency resource by itself. This can reduce overheads of the third communication apparatus, and reduce energy consumption of the third communication apparatus.

In a possible implementation, the second communication apparatus sends indication information of a feedback resource to the third communication apparatus. The second communication apparatus obtains the measurement result on the feedback resource.

In a possible implementation, the third beam corresponds to a fourth beam, and the fourth beam is used for sensing. For example, the third beam may be in a one-to-one correspondence with the fourth beam, or one third beam may correspond to a plurality of fourth beams.

Based on the foregoing solution, the second communication apparatus may indicate the third beam to the third communication apparatus, and the third beam corresponds to the fourth beam. In other words, the second communication apparatus indicates the fourth beam by indicating the third beam, and the third communication apparatus may perform sensing by using the third beam and the fourth beam.

In a possible implementation, the second communication apparatus obtains the measurement result based on the fourth beam.

Based on the foregoing solution, when the third beam corresponds to the fourth beam, the third communication apparatus may perform sensing based on the fourth beam, thereby determining the measurement result of the fourth beam.

In a possible implementation, the second communication apparatus sends indication information of a fourth time window to the third communication apparatus, where the fourth time window is a time window in which the third communication apparatus performs listening based on the third beam.

Based on the foregoing solution, the second communication apparatus indicates the indication information of the fourth time window to the third communication apparatus, so that the third communication apparatus performs listening based on the third beam in the fourth time window. In other words, the second communication apparatus notifies the third communication apparatus of duration of listening based on the third beam. This can reduce overheads and energy consumption of the third communication apparatus.

In a possible implementation, the second communication apparatus sends indication information of a fifth time window to the third communication apparatus. The fifth time window is a time window in which the third communication apparatus performs sensing based on the fourth beam. Alternatively, the fifth time window is a time window in which the third communication apparatus performs communication and sensing based on the fourth beam.

Based on the foregoing solution, the second communication apparatus indicates the indication information of the fifth time window to the third communication apparatus, so that the third communication apparatus performs sensing and/or communication based on the fourth beam in the fifth time window. In other words, the second communication apparatus notifies the third communication apparatus of duration of sensing and/or communication based on the fourth beam. This can reduce overheads and energy consumption of the third communication apparatus.

In a possible implementation, the second communication apparatus sends a fifth beam. The second communication apparatus determines a sixth beam based on a reflected beam of the fifth beam. The sixth beam is used for at least one of the following: communication by the second communication apparatus and sensing by the second communication apparatus.

Based on the foregoing solution, the second communication apparatus may sense the fourth communication apparatus by sending the fifth beam, and communicate with the fourth communication apparatus by using the sixth beam. In this way, the second communication apparatus can determine the indication information of the third beam that is sent to the third communication apparatus.

In a possible implementation, the indication information of the third beam is determined based on position information of the second communication apparatus, position information of the third communication apparatus, and position information of the fourth communication apparatus. Alternatively, the indication information of the third beam is determined based on a distance between the second communication apparatus and the third communication apparatus, a distance between the second communication apparatus and the fourth communication apparatus, and an included angle between a beam used for communication between the second communication apparatus and the third communication apparatus and a beam used for communication between the second communication apparatus and the fourth communication apparatus.

Based on the foregoing solution, the second communication apparatus may determine an approximate direction of the third beam based on information about the second communication apparatus, the third communication apparatus, and the fourth communication apparatus, thereby determining the indication information of the third beam.

According to a third aspect, a communication method is provided. The method may be performed by a third communication apparatus, and the third communication apparatus may be a network device or a terminal device. In the method, the third communication apparatus obtains indication information of a third beam and a first time-frequency resource. The third beam is used for at least one of the following: communication by the third communication apparatus and sensing by the third communication apparatus. The third communication apparatus sends the third beam on the first time-frequency resource. The third communication apparatus measures a reflected beam of the third beam, to obtain a measurement result of the reflected beam of the third beam. The third communication apparatus sends the measurement result to a second communication apparatus.

Based on the foregoing solution, because the indication information of the third beam is sent by the second communication apparatus to the third communication apparatus, the third communication apparatus does not need to perform sensing on a configured beam set. In other words, the third communication apparatus may not need to perform blind scanning on the configured beam set. This can reduce overheads of the third communication apparatus, and reduce energy consumption of the third communication apparatus.

In a possible implementation, the third communication apparatus obtains indication information of a target beam. The target beam is determined based on the measurement result, the target beam corresponds to the third beam, and the target beam is used for communication between the third communication apparatus and a fourth communication apparatus.

Based on the foregoing solution, the second communication apparatus determines the target beam for the fourth communication apparatus, to communicate with the fourth communication apparatus. In other words, the second communication apparatus may select another communication link for the third communication apparatus, to improve transmission reliability.

In a possible implementation, the third communication apparatus obtains indication information of a feedback resource. The third communication apparatus sends the measurement result to the second communication apparatus on the feedback resource.

In a possible implementation, the third beam corresponds to a fourth beam, and the fourth beam is used for sensing.

Based on the foregoing solution, the second communication apparatus may indicate the third beam to the third communication apparatus, and the third beam corresponds to the fourth beam. In other words, the second communication apparatus indicates the fourth beam by indicating the third beam, and the third communication apparatus may perform sensing by using the third beam and the fourth beam.

In a possible implementation, the third communication apparatus sends the fourth beam on the first time-frequency resource. The third communication apparatus measures a reflected signal of the fourth beam, to obtain a measurement result of the reflected signal of the fourth beam.

Based on the foregoing solution, when the third beam corresponds to the fourth beam, the third communication apparatus may perform sensing based on the fourth beam, thereby determining the measurement result of the fourth beam.

In a possible implementation, the third communication apparatus listens to first information on the third beam, where the first information is used for determining an occupied third time-frequency resource. The first time-frequency resource does not include the third time-frequency resource. Alternatively, the first time-frequency resource includes some or all time-frequency resources of the third time-frequency resource.

Based on the foregoing solution, the third communication apparatus may listen to the first information on a first beam, to determine an available time-frequency resource, so that interference to the available time-frequency resource can be reduced.

In a possible implementation, the third communication apparatus obtains indication information of a fourth time window, where the fourth time window is a time window in which the third communication apparatus performs listening based on the third beam.

Based on the foregoing solution, the second communication apparatus indicates the indication information of the fourth time window to the third communication apparatus, so that the third communication apparatus performs listening based on the third beam in the fourth time window. In other words, the second communication apparatus notifies the third communication apparatus of duration of listening based on the third beam. This can reduce overheads and energy consumption of the third communication apparatus.

In a possible implementation, the third communication apparatus obtains indication information of a fifth time window. The indication information of the fifth time window is duration for which the third communication apparatus performs sensing based on the fourth beam. Alternatively, the fifth time window is a time window in which the third communication apparatus performs communication and sensing based on the fourth beam.

Based on the foregoing solution, the second communication apparatus indicates the indication information of the fifth time window to the third communication apparatus, so that the third communication apparatus performs sensing and/or communication based on the fourth beam in the fifth time window. In other words, the second communication apparatus notifies the third communication apparatus of duration of sensing and/or communication based on the fourth beam. This can reduce overheads and energy consumption of the third communication apparatus.

In a possible implementation, the target beam includes a target transmit beam and a target receive beam. The third communication apparatus obtains indication information of the target transmit beam. Alternatively, the third communication apparatus obtains indication information of the target receive beam.

Based on the foregoing solution, the indication information of the target receive beam is sent to a destination node, and the indication information of the target transmit beam is sent to a sending node, so that transmission resources can be reduced.

According to a fourth aspect, a communication apparatus is provided, including a transceiver unit and a processing unit.

The transceiver unit is configured to: obtain a first time-frequency resource and a first beam; and send the first beam on the first time-frequency resource, where the first beam is used for sensing. The processing unit is configured to: determine a target beam from the first beam based on a reflected beam of the first beam; and determine a second time-frequency resource based on the target beam. The target beam corresponds to a first beam on which the reflected beam is received.

In a design, the target beam is used for competitive resource selection.

In a design, listening is performed on first information in a first time window, where the first information is used for determining an occupied third time-frequency resource.

In a design, the first beam is a pre-configured beam.

In a design, the processing unit is further configured to listen to the first information in the first time window based on a second beam. The second beam corresponds to the first beam.

In a design, a second beam on which the first information is not detected corresponds to the first beam.

In a design, the first time-frequency resource is located in a second time window in time domain. The first time window and the second time window alternately appear in time domain. Alternatively, the first time window is located before the second time window in time domain.

In a design, a length of the first time window is directly proportional to a quantity of second beams, and/or a length of the second time window is directly proportional to a quantity of first beams.

In a design, the processing unit is further configured to listen to the first information based on the target beam, where the first information is used for determining the occupied third time-frequency resource. The second time-frequency resource does not include the third time-frequency resource.

In a design, a time window is related to a priority of a service.

In a design, the second time-frequency resource is used for communication.

In a design, at least one of the following is randomly selected: the first time-frequency resource and the second time-frequency resource.

In a design, a frequency of the first time-frequency resource is different from a frequency of the second time-frequency resource.

According to a fifth aspect, a communication apparatus is provided, including a transceiver unit and a processing unit.

The transceiver unit is configured to send indication information of a third beam to a third communication apparatus. The third beam is used for at least one of the following: communication by the third communication apparatus and sensing by the third communication apparatus. The transceiver unit is further configured to obtain a measurement result based on the third beam. The processing unit is configured to determine a target beam based on the measurement result. The transceiver unit is further configured to send indication information of the target beam to the third communication apparatus and a fourth communication apparatus. The target beam is determined based on the measurement result, the target beam corresponds to the third beam, and the target beam is used for communication between the third communication apparatus and the fourth communication apparatus.

In a design, the transceiver unit is further configured to send indication information of a first time-frequency resource to the third communication apparatus, where the first time-frequency resource is used for transmitting the third beam.

In a design, the transceiver unit is further configured to send indication information of a feedback resource to the third communication apparatus. The transceiver unit is specifically configured to obtain the measurement result on the feedback resource.

In a design, the third beam corresponds to a fourth beam, and the fourth beam is used for sensing.

In a design, when obtaining the measurement result based on the third beam, the transceiver unit is specifically configured to obtain the measurement result based on a plurality of fourth beams.

In a design, the transceiver unit is further configured to send indication information of a fourth time window to the third communication apparatus, where the fourth time window is a time window in which the third communication apparatus performs listening based on the third beam.

In a design, the transceiver unit is further configured to send indication information of a fifth time window to the third communication apparatus. The fifth time window is a time window in which the third communication apparatus performs sensing based on the fourth beam. Alternatively, the fifth time window is a time window in which the third communication apparatus performs communication and sensing based on the fourth beam.

In a design, the transceiver unit is further configured to send a fifth beam. The processing unit is further configured to determine a sixth beam based on a reflected beam of the fifth beam. The sixth beam is used for at least one of the following: communication by a second communication apparatus and sensing by the second communication apparatus.

In a design, the indication information of the third beam is determined based on position information of the second communication apparatus, position information of the third communication apparatus, and position information of the fourth communication apparatus. Alternatively, the indication information of the third beam is determined based on a distance between the second communication apparatus and the third communication apparatus, a distance between the second communication apparatus and the fourth communication apparatus, and an included angle between a beam used for communication between the second communication apparatus and the third communication apparatus and a beam used for communication between the second communication apparatus and the fourth communication apparatus.

According to a sixth aspect, a communication apparatus is provided, including a transceiver unit and a processing unit.

The transceiver unit is configured to obtain indication information of a third beam and a first time-frequency resource. The third beam is used for at least one of the following: communication by the third communication apparatus and sensing by the third communication apparatus. The transceiver unit is further configured to send the third beam on the first time-frequency resource. The processing unit is configured to measure a reflected beam of the third beam, to obtain a measurement result of the reflected beam of the third beam. The transceiver unit is further configured to send the measurement result to a second communication apparatus.

In a design, the transceiver unit is further configured to obtain indication information of a target beam. The target beam is determined based on the measurement result, and the target beam corresponds to the third beam. The target beam is used for communication between the third communication apparatus and a fourth communication apparatus.

In a design, the transceiver unit is further configured to: obtain indication information of a feedback resource; and send the measurement result to the second communication apparatus on the feedback resource.

In a design, the third beam corresponds to a fourth beam, and the fourth beam is used for sensing.

In a design, when sending the third beam on the first time-frequency resource, the transceiver unit is specifically configured to send the fourth beam on the first time-frequency resource. The processing unit is specifically configured to measure a reflected signal of the fourth beam, to obtain a measurement result of the reflected signal of the fourth beam.

In a design, the processing unit is specifically configured to listen to first information on the third beam, where the first information is used for determining an occupied third time-frequency resource. The first time-frequency resource does not include the third time-frequency resource.

In a design, the transceiver unit is further configured to obtain indication information of a fourth time window, where the fourth time window is a time window in which the third communication apparatus performs listening based on the third beam.

In a design, the transceiver unit is further configured to obtain indication information of a fifth time window. The indication information of the fifth time window is duration for which the third communication apparatus performs sensing based on the fourth beam. Alternatively, the fifth time window is a time window in which the third communication apparatus performs communication and sensing based on the fourth beam.

In a design, the target beam includes a target transmit beam and a target receive beam. The transceiver unit is specifically configured to obtain, by the third communication apparatus, indication information of the target transmit beam. Alternatively, the transceiver unit is specifically configured to obtain indication information of the target receive beam.

According to a seventh aspect, this application provides a communication apparatus, including a processor. The processor is coupled to a memory, the memory is configured to store a computer program or instructions, and the processor is configured to execute the computer program or the instructions, to perform the method according to the implementations of the first aspect to the third aspect. The memory may be located inside or outside the apparatus. There are one or more processors.

According to an eighth aspect, this application provides a communication apparatus, including: a processor and an interface circuit. The interface circuit is configured to communicate with another apparatus, and the processor is configured to perform the method according to the implementations of the first aspect to the third aspect.

According to a ninth aspect, a communication apparatus is provided. The apparatus includes a logic circuit and an input/output interface.

In a design, the logic circuit is configured to obtain a first time-frequency resource and a first beam. The first beam is used for sensing. The input/output interface is configured to output the first beam on the first time-frequency resource. The logic circuit is further configured to determine a target beam based on a reflected beam of the first beam. The target beam corresponds to a first beam on which the reflected beam is received. The logic circuit is further configured to determine a second time-frequency resource based on the target beam.

In a design, the input/output interface is configured to output indication information of a third beam to a third communication apparatus. The third beam is used for at least one of the following: communication by the third communication apparatus and sensing by the third communication apparatus. The input/output interface is further configured to input a measurement result. The logic circuit is configured to determine the target beam based on the measurement result. The input/output interface is further configured to send indication information of the target beam to the third communication apparatus and a fourth communication apparatus. The target beam is determined based on the measurement result, the target beam corresponds to the third beam, and the target beam is used for communication between the third communication apparatus and the fourth communication apparatus.

In a design, the input/output interface is configured to input the indication information of the third beam and the first time-frequency resource. The third beam is used for at least one of the following: communication by the third communication apparatus and sensing by the third communication apparatus. The input/output interface is further configured to output the third beam on the first time-frequency resource. The logic circuit is configured to measure a reflected beam of the third beam, to obtain a measurement result of the reflected beam of the third beam. The input/output interface is further configured to output the measurement result to a second communication apparatus.

According to a tenth aspect, this application provides a communication system, including a first communication apparatus and at least one another communication apparatus that are configured to perform the method according to the implementations of the first aspect.

According to an eleventh aspect, this application provides a communication system, including a second communication apparatus that is configured to perform the method according to the implementations of the second aspect, and a third communication apparatus and a fourth communication apparatus that are configured to perform the method according to the implementations of the third aspect. The third communication apparatus may be a destination node, and the fourth communication apparatus may be a sending node. In other words, the fourth communication apparatus sends information to the third communication apparatus, and the third communication apparatus receives the information from the fourth communication apparatus. Alternatively, the third communication apparatus may be a sending node, and the fourth communication apparatus may be a destination node. In other words, the third communication apparatus sends information to the fourth communication apparatus, and the fourth communication apparatus receives the information from the third communication apparatus.

Specifically, the communication system may include the second communication apparatus, the third communication apparatus, and the fourth communication apparatus. The second communication apparatus sends indication information of a third beam to the third communication apparatus. The third beam is used for at least one of the following: communication by the third communication apparatus and sensing by the third communication apparatus.

The third communication apparatus obtains indication information of the third beam and a first time-frequency resource.

The third communication apparatus sends the third beam on the first time-frequency resource.

The third communication apparatus measures a reflected beam of the third beam, to obtain a measurement result of the reflected beam of the third beam.

The third communication apparatus sends the measurement result to the second communication apparatus.

The second communication apparatus obtains the measurement result based on the third beam. The second communication apparatus sends indication information of a target beam to the third communication apparatus and the fourth communication apparatus, where the target beam is determined based on the measurement result, the target beam corresponds to the third beam, and the target beam is used for communication between the third communication apparatus and the fourth communication apparatus.

The third communication apparatus obtains the indication information of the target beam.

The fourth communication apparatus obtains the indication information of the target beam.

In an example, the target beam includes a target receive beam and a target transmit beam, the second communication apparatus sends indication information of the target receive beam to the third communication apparatus, and the second communication apparatus sends indication information of the target transmit beam to the fourth communication apparatus. Alternatively, the second communication apparatus sends the indication information of the target transmit beam to the third communication apparatus, and the second communication apparatus sends the indication information of the target receive beam to the fourth communication apparatus.

According to a twelfth aspect, this application further provides a chip system, including a processor, configured to perform the method according to the implementations of the first aspect to the third aspect.

According to a thirteenth aspect, this application further provides a computer program product, including computer executable instructions. When the computer-executable instructions are run on a computer, the method according to the implementations of the first aspect to the third aspect is performed.

According to a fourteenth aspect, this application further provides a computer-readable storage medium. The computer-readable storage medium stores a computer program or instructions. When the instructions are run on a computer, the method according to the implementations of the first aspect to the third aspect is performed.

For technical effects achieved in the fourth aspect to the fourteenth aspect, refer to the technical effects in the first aspect, the second aspect, or the third aspect. Details are not described herein again.

### BRIEF DESCRIPTION OF DRAWINGS

FIG. 1 is a schematic diagram of beams according to an embodiment of this application;
FIG. 2(a) is one schematic diagram of a V2X communication system according to an embodiment of this application;
FIG. 2(b) is a schematic diagram of a V2X communication system according to an embodiment of this application;
FIG. 3A is a schematic diagram of a correspondence between a target beam and a first beam according to an embodiment of this application;
FIG. 3B is a schematic diagram in which a communication apparatus A performs active sensing according to an embodiment of this application;
FIG. 3C is a schematic diagram of active sensing plus resource selection according to an embodiment of this application;
FIG. 4A is a schematic diagram in which a communication apparatus A performs omnidirectional passive sensing according to an embodiment of this application;
FIG. 4B is a schematic diagram of omnidirectional passive sensing plus BF resource selection according to an embodiment of this application;
FIG. 5 is a schematic diagram of continuous BF passive sensing according to an embodiment of this application;
FIG. 6 is a schematic diagram of alternate BF passive sensing according to an embodiment of this application;
FIG. 7 is one example flowchart of a communication method according to an embodiment of this application;
FIG. 8A is a schematic diagram of omnidirectional passive sensing plus active sensing plus resource selection according to an embodiment of this application;
FIG. 8B is a schematic diagram of active sensing plus BF passive sensing plus resource selection according to an embodiment of this application;
FIG. 8C is a schematic diagram of active-passive alternate sensing plus resource selection according to an embodiment of this application;
FIG. 9A is a schematic diagram of omnidirectional passive sensing plus active sensing plus BF passive sensing plus resource selection according to an embodiment of this application;
FIG. 9B is a schematic diagram of BF passive sensing plus active sensing plus BF passive sensing plus resource selection according to an embodiment of this application;
FIG. 9C is a schematic diagram of active-passive alternate sensing plus BF passive sensing plus resource selection according to an embodiment of this application;
FIG. 10 is one example flowchart of a communication method according to an embodiment of this application;
FIG. 11 is a schematic diagram of a method for determining a third beam according to an embodiment of this application;
FIG. 12A is one schematic diagram of a scenario in which N2 assists N3 in determining a target beam according to an embodiment of this application;
FIG. 12B is one schematic diagram of a scenario in which N2 assists N3 in determining a target beam according to an embodiment of this application;
FIG. 12C is one schematic diagram of a scenario in which N2 assists N3 in determining a target beam according to an embodiment of this application;
FIG. 13 is one schematic diagram of a communication apparatus according to an embodiment of this application;
FIG. 14 is one schematic diagram of a communication apparatus according to an embodiment of this application;
FIG. 15 is one schematic diagram of a communication apparatus according to an embodiment of this application; and
FIG. 16 is one schematic diagram of a communication apparatus according to an embodiment of this application.

### DESCRIPTION OF EMBODIMENTS

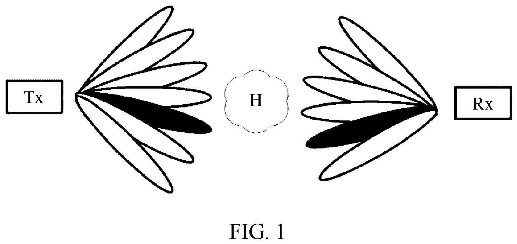

To facilitate understanding of the technical solutions provided in embodiments of this application, the following explains and describes terms in embodiments of this application.
1. Beam: Both a transmit end and a receive end can have beams formed through their respective antennas. As illustrated in FIG. 1, a transmit end (Tx)/receive end (Rx) has one or more beams formed through a plurality of antennas. As more antennas are used, a width of a beam formed becomes narrower. A beam with a relatively narrow width may be referred to as a narrow beam, and a beam with a relatively wide width may be referred to as a wide beam. In terms of space, one beam may correspond to one angular direction range, and an angular direction range corresponding to the narrow beam is less than that corresponding to the wide beam. Optionally, one or more narrow beams may be formed through the plurality of antennas on the transmit end/receive end. Optionally, one or more wide beams may be formed through the plurality of antennas on the transmit end/receive end. A correspondence between two beams may also mean that a spatial reception parameter of one beam relative to the other beam is quasi co-located (quasi co-location, QCL). In other words, a receiving angle of one beam may be obtained from the other beam.

The wide beam may be understood as a beam covering all directions, that is, a quasi-omni (quasi-omni) beam. Alternatively, an angular direction range of the wide beam may also be less than all directions, but corresponds to an angular direction range covered by a plurality of narrow beams.

It should be understood that a beam in this embodiment of this application may also be referred to as a signal, a beam signal, or a channel.

2. Sensing may include active sensing and passive sensing. Active sensing may be understood as that a communication apparatus senses a target by using a transmit beam. For example, the communication apparatus may send a beam, and listen to a reflected beam of the beam. When the reflected beam is detected, it is considered that there is a target in a direction of the beam. When no reflected beam is detected, it may be considered that there is no target in a direction of the beam. In this embodiment of this application, a process in which the communication apparatus sends a beam and listens to a reflected beam of the beam to sense a target may be understood as a process of active sensing. Alternatively, a process in which the communication apparatus listens to a reflected beam may be understood as a process of active sensing. Alternatively, a process in which the communication apparatus sends a beam may be understood as a process of active sensing.

Passive sensing may be understood as that the communication apparatus listens to, in a time unit, information transmitted by another communication apparatus, for example, control information, to determine an available time-frequency resource. In this embodiment of this application, the time unit may be a slot, a symbol, a mini-slot, a frame, a subframe, or a half-frame.

3. Listening means that a communication apparatus receives information transmitted by another communication apparatus, such as control information, a reference signal, and data. It should be noted that listening mentioned in embodiments of this application may also be represented as detecting, monitoring, or the like.

4. "A plurality of" in embodiments of this application means two or more. The term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. Moreover, it should be understood that although the terms "first", "second", and the like may be used in embodiments of the present invention to describe objects, these objects should not be limited to these terms. These terms are merely used to distinguish the objects from one another.

5. The terms "include", "have" and any variations thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes other steps or units inherent to the process, the method, the product, or the device. It should be noted that in embodiments of this application, the term such as "example" or "for example" is used to represent giving an example, an illustration, or a description. Any embodiment or design described by "example" or "for example" in embodiments of this application should not be construed as being more preferred or advantageous than other embodiments or designs. To be precise, the terms such as "example" or "for example" are intended to present a related concept in a specific manner.

In embodiments of this application, a time domain symbol may be an orthogonal frequency division multiplexing (orthogonal frequency division multiplexing, OFDM) symbol, or may be a discrete Fourier transform spread (Discrete Fourier Transform-spread-OFDM, DFT-s-OFDM) symbol. Unless otherwise specified, symbols in embodiments of this application are all time domain symbols.

The communication apparatus in embodiments of this application may be a network device, a terminal device (for example, a mobile phone or an uncrewed aerial vehicle), a transportation means (for example, a vehicle, a ship, an airplane, a robot, or an electric vehicle), or a wearable device (for example, glasses, a headset, a watch, or a head-mounted display (head mount display, HMD) device). Alternatively, the communication apparatus may be a chip, a sensing device, or the like.

The network device is an entity used to transmit or receive a signal on a network side, for example, a new generation NodeB (generation NodeB, gNB). The network device may be a device configured to communicate with a mobile device. The network device may be an access point (access point, AP) in a wireless local area network (wireless local area network, WLAN), a base transceiver station (base transceiver station, BTS) in a global system for mobile communication (global system for mobile communication, GSM) or code division multiple access (code division multiple access, CDMA), or may be a NodeB (NodeB, NB) in wideband code division multiple access (wideband code division multiple access, WCDMA), or may be an evolved NodeB (evolved NodeB, eNB, or eNodeB) in long term evolution (long term evolution, LTE), a relay station, an access point, integrated access and backhaul (integrated access and backhaul, IAB), a vehicle-mounted device, a wearable device, a network device in a future 5th generation mobile communication technology (5^{th} generation mobile technology, 5G) network, a network device in a future evolved public land mobile network (public land mobile network, PLMN) network, a gNodeB in a new radio (new radio, NR) system, or the like. In addition, in embodiments of this application, the network device provides services for a cell, and the terminal device communicates with the network device through a transmission resource (for example, a frequency domain resource or a spectrum resource) used by the cell. The network device in embodiments of this application may be a central unit (central unit, CU) or a distributed unit (distributed unit, DU), or the network device may include a CU and a DU. The CU and the DU may be physically separated, or may be deployed together. This is not specifically limited in embodiments of this application. In addition, in another possible case, the network device may be another apparatus providing a wireless communication function for the terminal device. A specific technology and specific device form used by the network device are not limited in embodiments of this application. For ease of description, in embodiments of this application, an apparatus that provides a wireless communication function for the terminal device is referred to as a network device.

The terminal device may be a wireless terminal device that can receive scheduling and indication information of the network device. The wireless terminal device may be a device that provides a user with voice and/or data connectivity, a handheld device having a wireless connection function, or another processing device connected to a wireless modem. The wireless terminal device may communicate with one or more core networks or the internet by using a radio access network (radio access network, RAN). The wireless terminal device may be a mobile terminal device, for example, a mobile phone (or referred to as a "cellular" phone, or a mobile phone (mobile phone)), a computer, or a data card. For example, the wireless terminal device may be a portable, pocket-sized, handheld, computer built-in, or in-vehicle mobile apparatus that exchanges voice and/or data with the radio access network. For example, the wireless terminal device may be a device such as a personal communication service (personal communication service, PCS) phone, a cordless phone, a session initiation protocol phone, a wireless local loop (wireless local loop, WLL) station, a personal digital assistant (personal digital assistant, PDA), a tablet (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device and a nextgeneration communication system, for example, a terminal device in a 5G network, a terminal device in a future evolved PLMN network, or a terminal device in an NR communication system.

Embodiments of this application may be applied to a sidelink (Sidelink) scenario and another scenario in which fast access is required. In addition, this embodiment of this application is further applicable to a scenario in which two other peer user nodes directly communicate with each other (Device to Device Communication, D2D), for example, phone-watch interconnection, and vehicle-to-everything (vehicle-to-everything, V2X). Usually, this embodiment of this application is applicable to a scenario in which a beam is used for sending a signal.

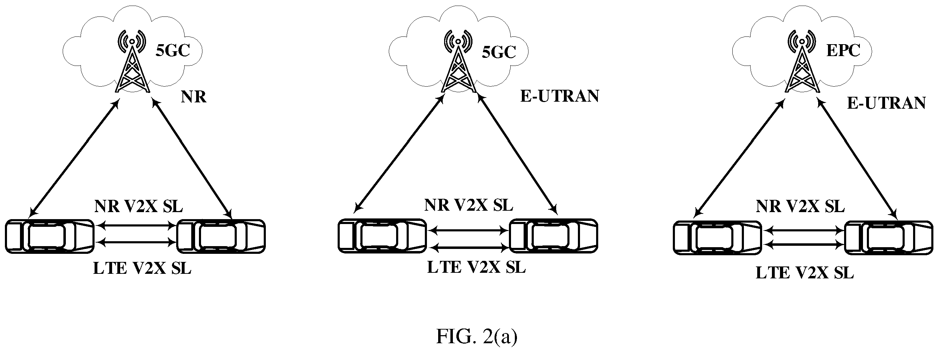

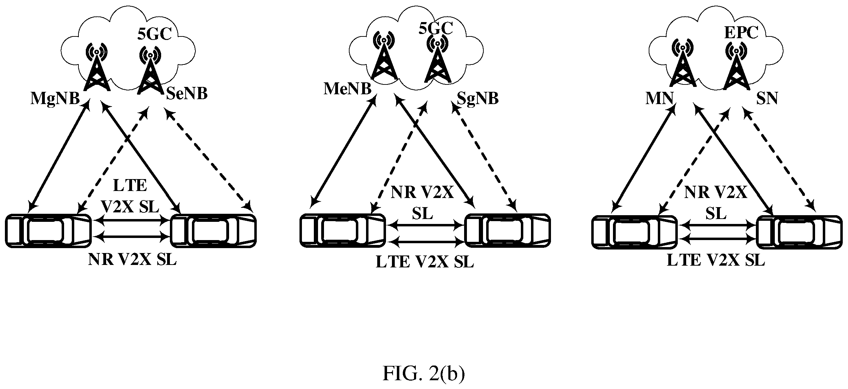

In a sidelink scenario, two terminal devices may directly send data to each other, and a transmit end does not need to first send the data to a network device, and then forward the data to a receive end by using a core network. Therefore, a data transmission delay can be greatly reduced. A V2X sidelink communication scenario is shown in FIG. 2(a) and FIG. 2(b). In FIG. 2(a), a gNB, an ng-eNB (next generation evolved NodeB), or an eNB provides control or configuration for a long term evolution vehicle-to-everything sidelink (long term evolution vehicle-to-everything sidelink, LTE V2X SL) and a new radio vehicle-to-everything sidelink (new radio vehicle-to-everything sidelink, NR V2X SL) between two vehicles. A 5GC (5G core network) in FIG. 2(a) is a core network of a 5G NR system, and an EPC (Evolved Packet Core) is a 4G core network. In FIG. 2(b), in a dual connectivity (NR EUTRA-Dual Connectivity, NE-DC) scenario of 5G NR and a 4G radio access network, an NR V2X SL between two vehicles is a primary link, and an LTE V2X SL between the two vehicles is a secondary link. In a dual connectivity scenario (next generation E-UTRANR-Dual Connectivity, NGEN-DC) of a 4G radio access network and 5G NR in a 5G core network, an LTE V2X SL between two vehicles is a primary link, and an NR V2X SL between the two vehicles is a secondary link. In a dual connectivity scenario (E-UTRA NR-Dual Connectivity, EN-DC) of a 4G radio access network and 5G NR, an LTE V2X SL between two vehicles is a primary link, and an NR V2X SL between the two vehicles is a secondary link.

In an NR system, sidelink broadcast, multicast, and unicast transmission between terminal devices are supported in any one of the following cases: within, outside, and partly within coverage of a network device. Physical channels used for transmission include a physical direct link control channel (physical sidelink control channel, PSCCH), a physical direct link shared channel (physical sidelink shared channel, PSSCH), and a physical direct link feedback channel (physical sidelink feedback channel, PSFCH). In the NR, sidelink transmission is based on a resource pool. A resource pool is a logical concept. One resource pool contains a plurality of physical resources.

In a scenario without network device coverage or in a distributed scheduling mode, when a terminal device transmits data, the terminal device needs to select a physical resource for transmission. The resource selection process may include but is not limited to the following two cases: 1. The terminal device randomly selects a resource for data transmission. 2. The terminal device listens to, by using an LBT mechanism, information such as control information, a reference signal, and data that are sent by another terminal device, and determines an unoccupied resource for data transmission.

However, data transmission performed in the first case causes relatively large interference to data transmission of the terminal device, and affects data transmission performance. Data transmission performed in the foregoing second case causes relatively poor coverage and relatively low data transmission performance.

In view of this, an embodiment of this application provides a communication method, so that data can be transmitted based on a beam, thereby improving coverage, increasing frequency reuse, and improving efficiency. In this method, sensing is performed based on a beam, and beam transmission in an unnecessary direction is reduced, thereby avoiding a resource waste, reducing energy consumption, and reducing interference.

For ease of understanding the technical solutions provided in embodiments of this application, the following explains and describes sensing manners in embodiments of this application. In this embodiment of this application, description is given by using an example in which a first communication apparatus performs sensing.

### Manner 1: Active sensing.

Active sensing may be understood as that the first communication apparatus sends a beam, and listens to whether there is a reflected beam, thereby determining a target beam. For example, the first communication apparatus may send a first beam, and listen to whether there is a reflected beam of the first beam. If the first communication apparatus detects the reflected beam, it is considered that there is a target in a direction of the first beam. If there is another communication apparatus, the first communication apparatus may determine the target beam based on the detected reflected beam.

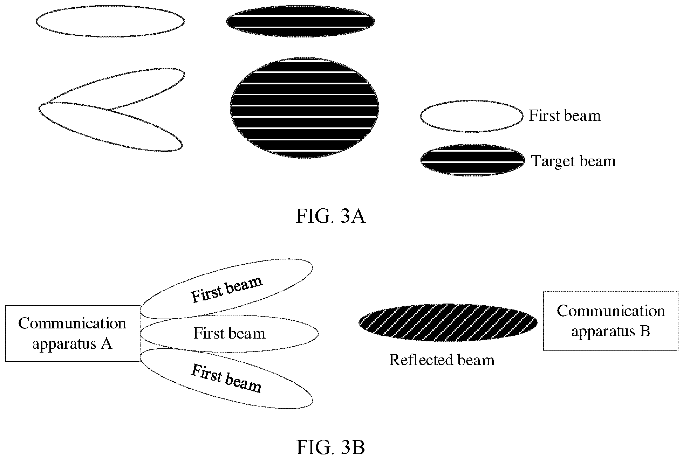

It may be understood that the target beam may correspond to the first beam on which the reflected beam is detected. For example, with reference to FIG. 3A, the target beam may be a first beam on which a reflected beam is received. For another example, the target beam may be in a one-to-one correspondence with the first beam. In other words, one target beam may correspond to one first beam. For another example, the target beam may correspond to a plurality of first beams. In other words, the target beam may be a wide beam, the first beam may be a narrow beam, and one wide beam may correspond to a plurality of narrow beams. When one target beam corresponds to a plurality of first beams, effect of combining the plurality of first beams may be equivalent to that of one target beam.

When one or more first beams receive a reflected beam, it may be considered that one target beam is determined. When a plurality of first beams correspond to one target beam, this helps alleviate a problem that a valid target is missed because of bad reflection received by some first beams.

Optionally, the first beam may alternatively use a subcarrier spacing greater than that of data or a synchronization signal, to shorten time domain transmission and reduce a delay of an active sensing process. Therefore, the first communication apparatus may further determine a subcarrier spacing used for sending the first beam.

Optionally, the first beam may alternatively use a carrier or a frequency band higher than that of the target beam. A higher carrier frequency or frequency band may support more antennas, have a larger bandwidth, have a better target identification resolution, and even may send a larger power, to reduce missed detection of targets. Therefore, the first communication apparatus may further determine a carrier or a frequency band used for sending the first beam.

In an example, the first beam may include a pre-configured beam or a predefined beam. For example, the first beam may include a synchronization beam, and the synchronization beam may be used for sending a synchronization signal. Optionally, the first beam may alternatively include a pilot beam, and the pilot beam may be used for sending a pilot signal. Alternatively, the first beam may include a reference signal beam, and the reference signal beam may be used for sending a reference signal. It should be understood that the reference signal may be a positioning reference signal used for positioning, or may be a sounding reference signal, or may be a reference signal for another purpose. This is not specifically limited in this application.

In another example, the first beam may alternatively be a beam determined through passive sensing. This example is described in detail subsequently, and details are not described herein.

It should be understood that the first communication apparatus may send the first beam in a polling manner, for example, send the first beam based on a sequence of beams in pre-configured beams or predefined beams. For example, if the first beam determined by using the foregoing two examples includes a first beam A, a first beam B, and a first beam C, the first communication apparatus may send the first beam A, and listen to a reflected beam of the first beam A. Then, the first communication apparatus may send the first beam B, and listen to a reflected signal of the first beam B, and so on, until all first beams are sent.

In a possible case, a time-frequency resource for sending the first beam by the first communication apparatus, for example, a first time-frequency resource, may be randomly selected. For example, the first communication apparatus may randomly select a time-frequency resource, and send the first beam on the time-frequency resource. In another possible case, the time-frequency resource used by the first communication apparatus to send the first beam may be obtained through passive sensing and listening. This case is described in detail subsequently, and details are not described herein. Randomly selecting the first time-frequency resource can reduce a delay and reduce energy consumption. However, random resource selection may cause interference to the first beam. However, interference can be reduced by determining the first time-frequency resource through passive sensing and listening.

In a possible implementation, the first communication apparatus may perform active sensing in a second time window. In other words, the first communication apparatus may send the first beam in the second time window, and listen to a reflected beam of the first beam. A length of the second time window is configurable. For example, the length of the second time window may be positively correlated with a quantity of first beams. In other words, if the quantity of first beams is relatively large, the length of the second time window may be relatively long, so that the first communication apparatus has sufficient time to send the first beam. For another example, the length of the second time window may be related to a service priority. For example, different priorities can be configured with different lengths. For example, from the perspective of reliability, a high priority may be configured with a relatively long length, and a low priority may be configured with a relatively short length. From the perspective of delay, a high priority may be configured with a relatively short length, and a low priority may be configured with a relatively long length. For another example, the length of the second time window may be related to a delay requirement of a service. Assuming that a service has a relatively high delay requirement, a length of the second time window may be configured be relatively short, to reduce a delay of an active sensing process. Alternatively, the length of the second time window may be flexibly configured based on an empirical value. This is not specifically limited in this application.

Refer to FIG. 3B. A communication apparatus A may send a first beam on a first time-frequency resource. The communication apparatus A may listen to a reflected beam of the first beam. In this way, the communication apparatus A may consider that there is a target in a direction of the first beam on which the reflected beam is received, for example, a communication apparatus B. In this way, the communication apparatus A may determine a target beam, for example, may determine that the first beam on which the reflected beam is received is the target beam, or may determine that the target beam corresponds to the first beam on which the reflected beam is received.

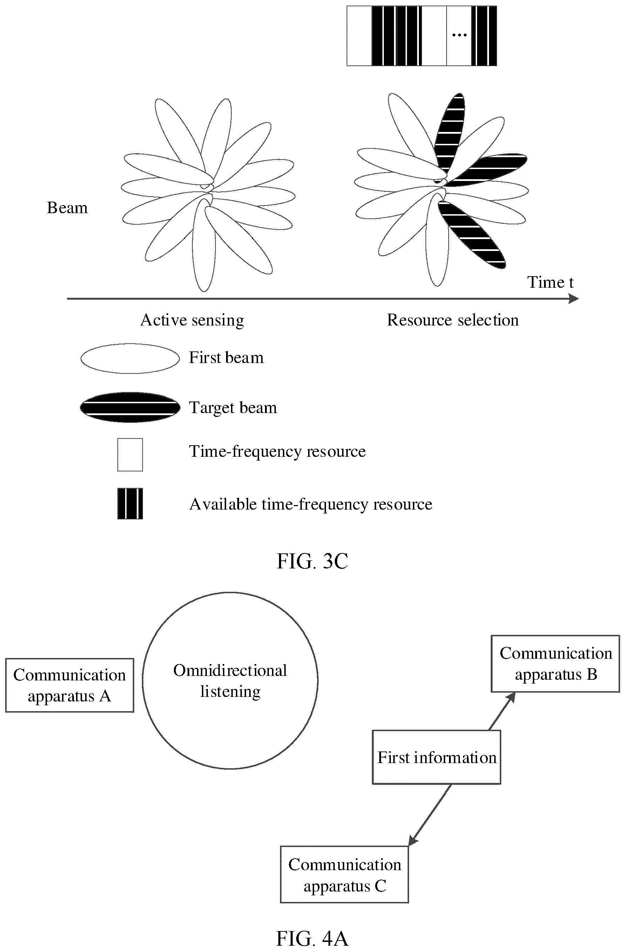

It should be understood that the target beam determined through the foregoing active sensing may be used for resource selection, or may be used for further sensing, for example, passive sensing. In a possible case, the target beam may be used for resource selection, the first communication apparatus may randomly perform time-frequency resource selection by using the target beam, and the first communication apparatus may perform communication by using the target beam and the selected time-frequency resource. Refer to FIG. 3C. The first communication apparatus performs active sensing based on the first beam, and determines the target beam. The first communication apparatus may randomly select an available time-frequency resource on the target beam for communication. In another possible case, the target beam may be used for further sensing. For example, the first communication apparatus may perform listening based on the target beam, to determine an available time-frequency resource. This case is described in detail subsequently, and details are not described herein. The target beam is determined based on active sensing and the time-frequency resource is randomly selected for communication, so that beam energy can be concentrated in a target direction, a delay is low, and energy consumption is low. However, random resource selection may increase interference, and interference may be reduced if further sensing is performed.

In this embodiment of this application, the first beam may be a beam dedicated to active sensing or target detection, or may be a synchronization beam, or may be a reference signal beam. This is not specifically limited in this application. A quantity of first beams may be less than or equal to a quantity of synchronization beams, or the quantity of first beams may be less than or equal to a quantity of reference signal beams.

In a possible case, the first communication apparatus may perform active sensing a plurality of times based on the first beam. For example, the first communication apparatus may perform active sensing once or twice. Specifically, it is assumed that the first beam includes a first beam A, a first beam B, and a first beam C. When performing active sensing for the first time, the first communication apparatus may perform active sensing in a polling manner in a sequence of the first beam A, the first beam B, and the first beam C. After specific duration is reached, the first communication apparatus may perform active sensing for the second time. Similarly, the first communication apparatus may perform active sensing in a polling manner in a sequence of the first beam A, the first beam B, and the first beam C. It should be noted that a quantity of times that the first communication apparatus performs active sensing may be predefined, for example, once, twice, or three times. Optionally, a relatively small quantity of times of active sensing may be defined for a delay-sensitive service, to reduce a delay. For another example, a relatively small quantity of times of active sensing may be defined for a communication apparatus sensitive to power consumption, to reduce power consumption of the communication apparatus.

It should be understood that the first communication apparatus may determine a period of active sensing, and the first communication apparatus may perform active sensing based on the first beam in each period. A period of active sensing may be related to a service priority. For example, a high-priority service may correspond to a relatively short period, and a low-priority service may correspond to a relatively long period. For another example, a delay-sensitive service may correspond to a relatively short period.

### Manner 2: Passive sensing.

Passive sensing may be understood as that a first communication apparatus listens to, in a time unit, first information transmitted by another communication apparatus, and determines an available time-frequency resource based on the first information. The first information herein may include one or more of control information, a reference signal, and data. It should be noted that passive sensing may be classified into omnidirectional passive sensing and beam passive sensing, which are described in detail below.

### (1) Omnidirectional passive sensing.

Omnidirectional passive sensing may be understood as that a communication apparatus does not consider a beam when listening to the first information. Omnidirectional passive sensing is sensing based on a wide beam or an omnidirectional receive beam. The first communication apparatus may listen to, based on each time unit (for example, one or more symbols at the beginning), one or more of control information, a reference signal, and data that are sent to another communication apparatus.

In a possible implementation, the first communication apparatus may listen to the control information. The control information may be transmitted by another communication apparatus, for example, may be transmitted by a communication apparatus B to a communication apparatus C. The control information may be used for scheduling a third time-frequency resource, and the third time-frequency resource may be used for transmitting service data of the another communication apparatus, for example, may be used for transmitting service data of the communication apparatus B and/or may be used for transmitting service data of the communication apparatus C.

In an example, the first communication apparatus may parse the control information to determine the third time-frequency resource. The first communication apparatus may determine that the third time-frequency resource is an occupied time-frequency resource. Optionally, the third time-frequency resource may include a plurality of periodically reserved time-frequency resources. For example, the first communication apparatus may determine a period of the service data by parsing the control information. In other words, the communication apparatus B and/or the communication apparatus C transmit/transmits the service data on a time-frequency resource scheduled by using the control information every other period. Therefore, the third time-frequency resource may include the time-frequency resource scheduled in each period. It should be understood that a time-frequency resource on which the control information is detected may also be considered as a non-available time-frequency resource. In this way, the communication apparatus selects an unoccupied time-frequency resource as an available time-frequency resource for communication or sensing, so that interference to another communication apparatus and the communication apparatus can be reduced.

In a possible case, the first communication apparatus may determine that an unscheduled time-frequency resource is an available time-frequency resource. In another possible case, the first communication apparatus may determine a priority of the service data by using the control information. When the priority of the service data is lower than a first threshold, the first communication apparatus may also consider that the third time-frequency resource scheduled by using the control information is an available time-frequency resource. For example, it is determined that in the third time-frequency resource scheduled by using the control information, a third time-frequency resource for transmitting data, a time-frequency resource for transmitting a pilot, and/or the like are/is an available time-frequency resource. In this way, when an occupancy rate of resources is relatively high, the first communication apparatus may also select an available time-frequency resource for communication or sensing.

In another example, the first communication apparatus may listen to the reference signal and/or the data. The first communication apparatus may measure energy of a time-frequency resource carrying the reference signal and/or the data, for example, a reference signal power (reference signal received power, RSRP), reference signal received quality (reference signal received quality, RSRQ), or a signal to interference plus noise ratio (signal to interference plus noise ratio, SINR). The first communication apparatus may determine that a time-frequency resource whose energy is less than or equal to a second threshold is an available time-frequency resource. Herein, the time-frequency resource whose energy is less than or equal to the second threshold may be understood as that the first communication apparatus listens to the reference signal and/or the data on the time-frequency resource, but the energy of the time-frequency resource is less than or equal to the second threshold. In this case, it may be considered that a communication apparatus for transmitting the reference signal and/or the data is relatively far away from the first communication apparatus. Therefore, the first communication apparatus performs communication or sensing on the time-frequency resource, and interference is relatively small. In this way, when an occupancy rate of resources is relatively high, the first communication apparatus may also select an available time-frequency resource for communication or sensing.

Alternatively, the time-frequency resource whose energy is less than or equal to the second threshold may be understood as that the first communication apparatus does not detect any one of the reference signal, the data, or the control information on the time-frequency resource. That is, no information is transmitted on the time-frequency resource. In this way, the first communication apparatus selects an unoccupied time-frequency resource as an available time-frequency resource for communication or sensing, so that interference to another communication apparatus and the first communication apparatus can be reduced.

Optionally, the first communication apparatus may listen to the first information in a first time window. A length of the first time window may be related to the priority of the service data. For implementation, refer to a relationship between the second time window and the priority of the service data. Alternatively, the length of the first time window may be flexibly configured based on an empirical value, and details are not described herein again. In a possible case, to determine an available time-frequency resource as soon as possible, a length of the first time window may be configured to be relatively short, for example, 100 ms, to reduce a delay of omnidirectional passive sensing.

Refer to FIG. 4A. The communication apparatus A may listen to the first information. For example, the communication apparatus A may listen to control information transmitted by the communication apparatus B to the communication apparatus C. The communication apparatus A may determine an occupied third time-frequency resource based on the control information, to determine an available time-frequency resource. For another example, the communication apparatus A may listen to data sent by the communication apparatus C, and measure energy of a time-frequency resource occupied by the data. If the energy of the time-frequency resource is less than or equal to the second threshold, it may be considered that the time-frequency resource is also an available time-frequency resource.

In a possible implementation, the available time-frequency resource determined through the foregoing omnidirectional passive sensing may be used for transmitting the first beam used for active sensing in Manner 1. For example, the first communication apparatus may send the first beam on the available time-frequency resource. The first beam is sent on the available time-frequency resource, so that use of the third time-frequency resource with relatively large interference can be avoided. Therefore, interference to data transmission of the first communication apparatus is reduced, and interference to the reflected beam is also reduced.

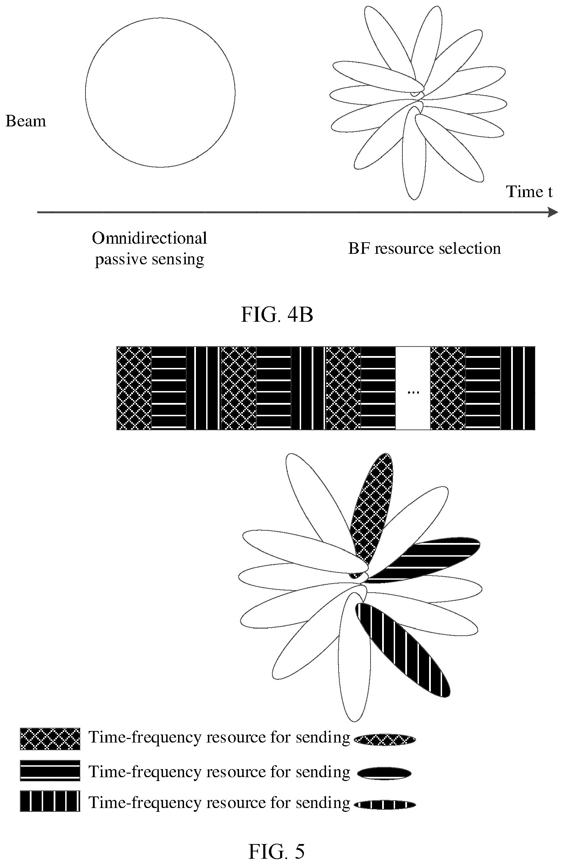

In another possible implementation, the available time-frequency resource determined through the foregoing omnidirectional passive sensing may be used for beam resource selection. Refer to FIG. 4B. The first communication apparatus may perform full beam scanning based on a configured beam set on the available time-frequency resource. The first communication apparatus may broadcast a beam in the configured beam set on the available time-frequency resource, to implement full beam scanning. In this way, the first communication apparatus performs full beam scanning, thereby increasing coverage and improving data transmission performance.

### (2). Beamforming (beamforming, BF) passive sensing.

BF passive sensing may be understood as that a first communication apparatus may listen to first information based on a beam. For example, the first communication apparatus may listen to the first information based on a second beam. When the first communication apparatus performs BF passive sensing, the first communication apparatus may listen to the first information in one time unit based on one second beam, or may listen to the first information in one time unit based on a plurality of second beams. The first communication apparatus may listen to, based on each time unit (for example, one or more symbols at the beginning) and based on the second beam, one or more of control information, reference signal, and data that are sent to another communication apparatus.

In a possible case, a beam used for BF passive sensing may include a pre-configured beam or a predefined beam. For example, the second beam may include a synchronization beam, a pilot beam, a reference signal beam, or the like, and may be implemented with reference to the first beam. In another possible case, the beam used for BF passive sensing may be determined through active sensing. For example, when listening to the first information, the first communication apparatus may listen to the first information based on a target beam determined through active sensing. The first communication apparatus may determine the target beam through active sensing, that is, determine a target direction. Then, the first communication apparatus performs listening based on the target beam to determine an available time-frequency resource, so that a quantity of beams listened to by the first communication apparatus can be reduced, and interference to the first communication apparatus when communication is performed based on the target beam can also be reduced.

It may be understood that the second beam may correspond to the target beam. For example, the second beam may be the target beam. For another example, the second beam may be in a one-to-one correspondence with the target beam. In other words, one second beam may correspond to one target beam. Optionally, the second beam may also correspond to the first beam. For example, the second beam may be the first beam. For another example, the second beam may be in a one-to-one correspondence with the first beam. In other words, one second beam corresponds to one first beam. For another example, the second beam may correspond to a plurality of first beams. In other words, the second beam may be a wide beam, the first beam may be a narrow beam, and one wide beam may correspond to a plurality of narrow beams. When one second beam corresponds to a plurality of first beams, effect of combining the plurality of first beams may be equivalent to that of one second beam.

In a possible implementation, the first communication apparatus may listen to the first information based on the second beam in an alternate listening manner. For example, the first communication apparatus may perform alternate listening based on the second beam in a sequence of pre-configured beams or predefined beams. Refer to FIG. 5. It is assumed that the second beam may include a second beam A, a second beam B, and a second beam C. The first communication apparatus may listen to the first information based on the second beam A. Then, the first communication apparatus may listen to the first information based on the second beam B, and so on. After the first communication apparatus detects the second beam, the first communication apparatus may further perform listening again based on the second beam in a sequence of the second beam A, the second beam B, and the second beam C, until a quantity of times that the first communication apparatus performs BF passive listening meets a specific quantity of times or reaches specific duration.

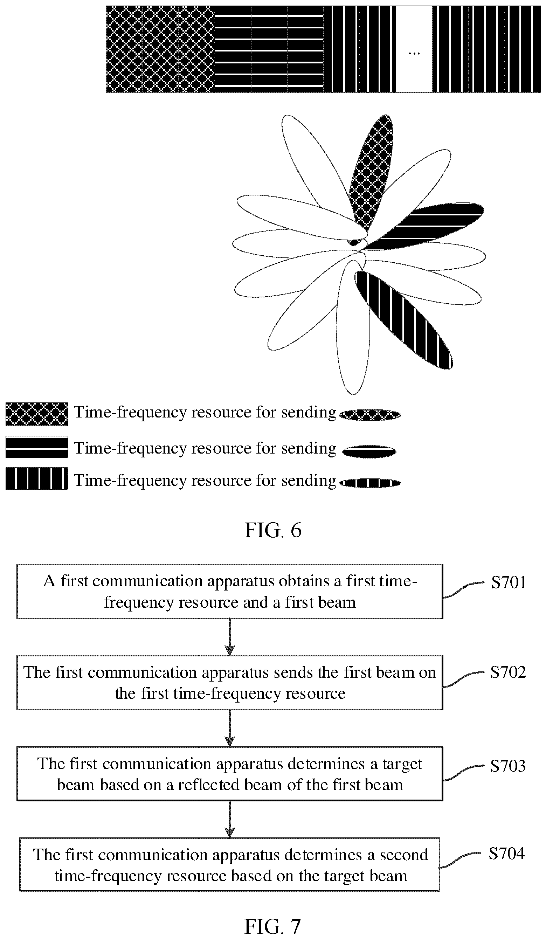

In another possible implementation, the first communication apparatus may perform continuous listening on one second beam, and then perform continuous listening on a next second beam, until listening is performed on all second beams. For example, the first communication apparatus may perform continuous listening based on the second beam in a sequence of pre-configured beams or predefined beams. Refer to FIG. 6. It is assumed that the second beam may include a second beam A, a second beam B, and a second beam C. The first communication apparatus may listen to the first information based on the second beam A. A quantity of times that the first communication apparatus listens to the first information based on the second beam A may meet a predefined quantity of times (an example of three times is used in FIG. 6), for example, three times or four times. The first communication apparatus may continue to listen to the first information based on the second beam B. Similarly, a quantity of times that the first communication apparatus listens to the first information based on the second beam B may also meet a predefined quantity of times. By analogy, until the first communication apparatus listens to the first information based on all second beams, the first communication apparatus may determine an available time-frequency resource in each second beam direction.

In a possible case, a quantity of times and a period of performing BF passive sensing by the first communication apparatus based on the second beam can be implemented with reference to the quantity of times and the period of active sensing. Details are not described herein again. For continuous listening or alternate listening, different periods may be configured on a same second beam, to listen to service transmission configured with different periods and identify a resource occupation status of a corresponding service and a received signal energy status, thereby facilitating reference in resource selection.

It should be understood that the first communication apparatus may determine an available time-frequency resource, for example, a third time-frequency resource, by listening to the first information. The first communication apparatus listens to the first information based on the second beam, and may determine an available time-frequency resource of the second beam. For implementation of listening to the first information by the first communication apparatus, refer to the foregoing omnidirectional passive sensing.

It should be noted that a difference between BF passive sensing and omnidirectional passive sensing lies in that the BF passive sensing may determine an available time-frequency resource in a beam direction, while the omnidirectional passive sensing may determine an available time-frequency resource in all directions. An available time-frequency resource in each direction may be determined by determining an available time-frequency resource through omnidirectional passive sensing. However, a time-frequency resource occupied by another communication apparatus that is relatively far away from the first communication apparatus may not be determined. In other words, the available time-frequency resource determined through omnidirectional passive sensing may also have relatively small interference. An available time-frequency resource in each beam direction may be determined by determining an available time-frequency resource through BF passive sensing. Even if another communication apparatus is relatively far away from the first communication apparatus, the first communication apparatus may also determine, based on BF passive sensing, a time-frequency resource occupied by the another communication apparatus. Therefore, the available time-frequency resource determined through BF passive sensing has less interference, and even interference may be avoided.

In a possible case, the first communication apparatus may listen to the first information based on the second beam, to determine the first beam used for active sensing. For example, the first communication apparatus may determine, based on the second beam, that there is a beam direction of the third time-frequency resource. In this case, the first communication apparatus may determine that there is a target in a beam direction of the second beam. Therefore, the first communication apparatus may no more perform active sensing based on the second beam. In this way, overheads of the first communication apparatus can be reduced, and a delay can also be reduced. It is assumed that the first communication apparatus listens to the first information based on the second beam, and determines that there is no beam direction of the third time-frequency resource. In other words, the first communication apparatus does not detect the first information based on one second beam. In other words, there may be no target in the beam direction of the second beam. To accurately determine whether there is a target in the beam direction of the second beam, the first communication apparatus may perform active sensing based on the second beam. For implementation, refer to active sensing in Manner 1. Details are not described herein again.

In the foregoing case, the first beam may correspond to a second beam on which the first information is not detected. For example, the first beam may be the second beam on which the first information is not detected, or it may be understood that the first beam may be a beam remaining after the second beam on which the first information is detected is excluded from a pre-configured beam set. For another example, one first beam may correspond to the second beam on which the first information is not detected, or it may be understood that the first beam may be in a one-to-one correspondence with the beam remaining after the second beam on which the first information is detected is excluded from the pre-configured beam set. For another example, a plurality of first beams may correspond to one second beam on which the first information is not detected, or it may be understood that the plurality of first beams may correspond to the beam remaining after the second beam on which the first information is detected is excluded from the pre-configured beam set. In other words, the first beam may be a narrow beam, and the second beam may be a wide beam. When the first information is not detected based on the wide beam, the first communication apparatus may perform active sensing based on the narrow beam, and effect of combining a plurality of narrow beams may be equivalent to that of one wide beam. The first beam and the second beam may be located on different carriers or frequency bands. For example, the first beam is located on a higher carrier or frequency band. Usually, a higher carrier or frequency band corresponds to more antennas and a larger bandwidth. In addition, there may be an independent power configuration. There may be a relatively narrow beam, and there is a higher resolution for target direction identification. Even if the first beam and the second beam are located on a same carrier or frequency band, a higher transmit power may be configured for sending of the first beam, to better listen to a reflected beam.

In another possible case, the available time-frequency resource determined by the first communication apparatus based on the second beam may be used for communication. For example, it is assumed that the first communication apparatus listens to the first information based on the second beam A, and determines that the available time-frequency resource includes a fourth time-frequency resource. In this case, the first communication apparatus may transmit data, control information, or the like based on the second beam A on the fourth time-frequency resource for communication.

Optionally, the first communication apparatus may listen to the first information in a third time window based on the second beam. In other words, the first communication apparatus may listen to the first information in a plurality of time units based on the second beam. To control a delay, a quantity of time units may be limited. In other words, a length of the third time window may be controlled. A length of the third time window may be related to a priority of service data. For implementation, refer to the relationship between the second time window and the priority of the service data. Alternatively, the length of the third time window may be flexibly configured based on an empirical value, and details are not described herein again. In a possible case, the length of the third time window may be related to a quantity of second beams. For example, a larger quantity of second beams indicates a longer length of the third time window. A relatively small length of the third time window is conducive to transmitting a delay-type service and a power-sensitive service.

Generally, the length of the third time window is greater than the length of the first time window. In the first time window, the first communication apparatus may determine, based on listening of a time unit, whether a current time unit is available. In the third time window, the first communication apparatus may determine average strength of a received signal, an interference degree of a system, or current load of a system through relatively long-time listening, to adjust a data transmission parameter such as resource selection, adjust coding scheme selection, and the like.

Based on the foregoing sensing manners, the first communication apparatus can determine an available time-frequency resource in a beam direction, and perform communication based on the beam and the available time-frequency resource, so that coverage can be increased, thereby improving data transmission performance.

With reference to the foregoing sensing manners, active sensing, omnidirectional passive sensing, and BF passive sensing are combined, so that interference can be reduced and coverage can be increased, thereby improving data transmission performance. The following shows a communication method provided in an embodiment of this application. FIG. 7 is an example flowchart of a communication method according to an embodiment of this application. The communication method may include the following operations. In the method embodiment shown in FIG. 7, a first communication apparatus may be a terminal device or a network device.

S701: The first communication apparatus obtains a first time-frequency resource and a first beam.

S702: The first communication apparatus sends the first beam on the first time-frequency resource.

S703: The first communication apparatus determines a target beam based on a reflected beam of the first beam.

The target beam may correspond to a first beam on which the reflected beam is received. For example, the target beam may include the first beam on which the reflected beam is received. For another example, one target beam may correspond to a plurality of first beams on which the reflected beam is received. For another example, one target beam may correspond to one first beam on which the reflected beam is received. For a correspondence between the target beam and the first beam, refer to related descriptions in the foregoing active sensing in Manner 1. Details are not described herein again.

S704: The first communication apparatus determines a second time-frequency resource based on the target beam.

The target beam determined by the first communication apparatus may be used for further sensing. For example, the first communication apparatus may perform BF passive sensing based on the target beam, to determine the second time-frequency resource. For the second time-frequency resource herein, refer to related descriptions of the available time-frequency resource determined through BF passive sensing in Manner 2. For example, the second time-frequency resource may not include a third time-frequency resource. For another example, the second time-frequency resource may include a third time-frequency resource occupied by a service whose priority is lower than a first threshold, and/or the second time-frequency resource may include a third time-frequency resource whose energy is lower than a second threshold. In another possible case, the target beam may alternatively be used for resource selection. For example, the first communication apparatus may randomly select the second time-frequency resource based on the target beam.

The second time-frequency resource may be used by the first communication apparatus for communication. For example, the first communication apparatus may transmit control information, data, a reference signal, or the like on the second time-frequency resource.

Based on the solution shown in FIG. 7, the first communication apparatus may perform active sensing based on the first beam, to determine a target direction, so that a frequency reuse gain can be obtained, coverage can be increased, interference can be reduced, and transmission performance is improved. Because active sensing is used, blind beam scanning for a broadcast service can be reduced, overheads and network interference can be reduced, and energy consumption of the first communication apparatus can also be reduced.

In a possible case, the first time-frequency resource in S701 may be the available time-frequency resource determined through passive sensing shown in Manner 2. For example, the first time-frequency resource may include the available time-frequency resource determined through omnidirectional passive sensing, and/or the first time-frequency resource may include the available time-frequency resource determined through BF passive sensing.

For example, the first time-frequency resource may not include the third time-frequency resource. In other words, the first time-frequency resource may include an unoccupied time-frequency resource. Optionally, the first time-frequency resource may include a third time-frequency resource whose energy is less than the second threshold, and/or the first time-frequency resource may include a time-frequency resource occupied by a service whose priority is lower than the first threshold. For the first time-frequency resource, refer to related descriptions of the available time-frequency resource in omnidirectional passive sensing. Details are not described herein again.

In another possible case, the first time-frequency resource may be a randomly selected time-frequency resource. If the first time-frequency resource is an available time-frequency resource determined through passive sensing, in comparison with a randomly selected time-frequency resource, interference caused by another communication apparatus to the first communication apparatus can be reduced, or interference caused by information transmitted by another communication apparatus to the first beam can be reduced, so that transmission performance of the first beam may be improved.

The first beam in S701 may be used for sensing. For example, the first beam may be used for active sensing. In an example, the first beam may be a pre-configured beam or a predefined beam, for example, a synchronization beam or a pilot beam. For details, refer to related descriptions of active sensing in Manner 1. In another example, the first beam may be determined based on a second beam used for BF passive sensing. For example, the first beam may correspond to a second beam on which the first information is not detected. For details, refer to related descriptions in the foregoing BF passive sensing. Details are not described herein again. If the first beam corresponds to the second beam on which the first information is not detected, a quantity of first beams used when the first communication apparatus performs active sensing is relatively small, so that a delay of an active sensing process can be reduced.

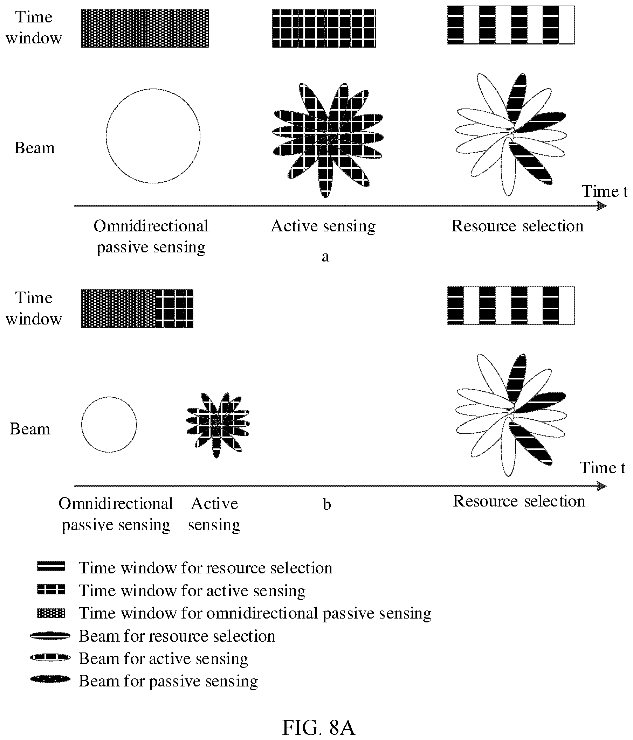

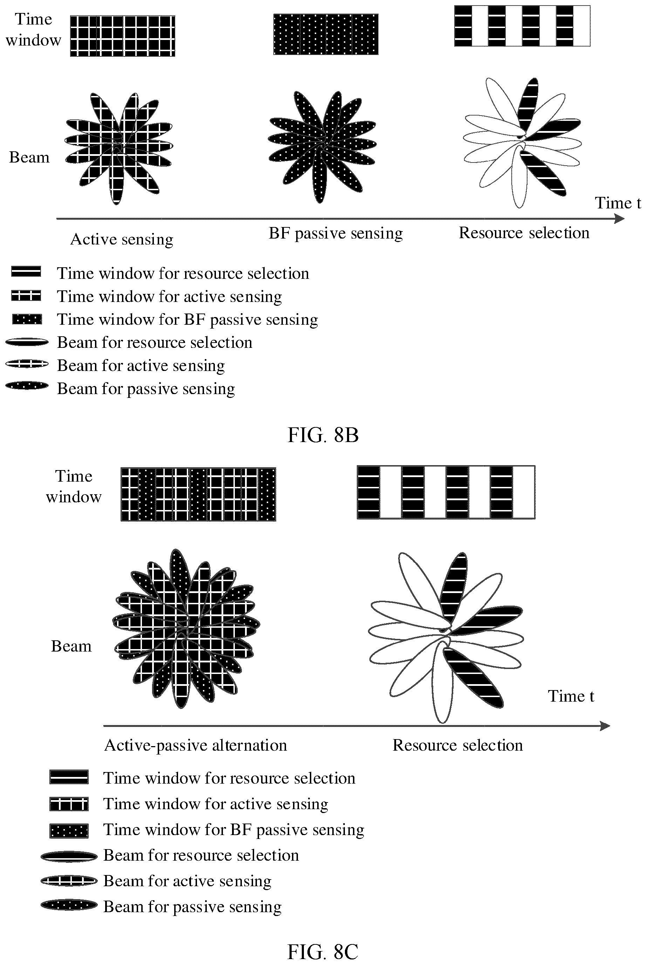

With reference to FIG. 8A and FIG. 8B, the following describes a manner of determining the first time-frequency resource and/or the first beam through passive sensing.

FIG. 8A is a schematic diagram of determining the first time-frequency resource through omnidirectional passive sensing according to an embodiment of this application. In the embodiment shown in FIG. 8A, the first communication apparatus may perform omnidirectional passive sensing in a first time window. In other words, the first communication apparatus may listen to the first information in the first time window. The first communication apparatus may listen to the first information in each direction because of omnidirectional passive sensing. The first communication apparatus may determine an occupied time-frequency resource, namely, the third time-frequency resource, by listening to the first information. Based on the third time-frequency resource, the first communication apparatus may determine an available time-frequency resource, for example, the first time-frequency resource in S701. For details, refer to related descriptions in the foregoing omnidirectional passive sensing. In S702, the first communication apparatus may send the first beam on the determined first time-frequency resource, and in S703, the first communication apparatus may listen to the reflected beam of the first beam, to perform active sensing. The first communication apparatus may determine, through active sensing, that there is a target on the first beam on which the reflected beam is received. In this case, in S704, the first communication apparatus may determine the target beam based on the first beam on which the reflected beam is received. For a manner in which the first communication apparatus determines the target beam based on the first beam, refer to related descriptions in the foregoing active sensing.

It should be understood that a length of the first time window may be flexibly configured. FIG. 8A shows first time windows with two different lengths. As shown in a in FIG. 8A, when the length of the first time window is relatively large, the first communication apparatus may relatively comprehensively listen to first information of different services, to relatively comprehensively determine the third time-frequency resource. Therefore, the determined available time-frequency resource has relatively small interference. As shown in b in FIG. 8A, when the length of the first time window is relatively small, the first communication apparatus may relatively quickly determine the third time-frequency resource. Therefore, a delay in an omnidirectional passive sensing process can be reduced.

As described above, the target beam in S704 may be used for further sensing or may be used for resource selection. FIG. 8B shows a manner in which the first communication apparatus determines the second time-frequency resource based on the target beam. In the manner shown in FIG. 8A, in S704, the first communication apparatus may perform random resource selection based on the target beam, to determine the second time-frequency resource. It should be understood that, when performing random resource selection, the first communication apparatus may perform selection from the available time-frequency resource determined through omnidirectional passive sensing.

FIG. 8B is a schematic diagram of determining the first time-frequency resource through BF passive sensing according to an embodiment of this application. In the embodiment shown in FIG. 8B, the first communication apparatus may perform BF passive sensing in the third time window. In other words, the first communication apparatus may listen to the first information in the third time window based on the second beam, and determine an occupied time-frequency resource, namely, the third time-frequency resource. Based on the third time-frequency resource, the first communication apparatus may determine an available time-frequency resource, for example, the first time-frequency resource in S701. For details, refer to related descriptions in BF passive sensing. Because of BF passive sensing, the first communication apparatus may listen to the first information in the beam direction of the second beam. Compared with omnidirectional passive sensing, even if the target is far away from the first communication apparatus, the first communication apparatus may also listen to the first information transmitted by the target. Therefore, the available time-frequency resource determined through BF passive sensing has less interference. In S702, the first communication apparatus may send the first beam on the determined first time-frequency resource, and in S703, the first communication apparatus may listen to the reflected beam of the first beam, to perform active sensing. The first communication apparatus may determine, through active sensing, that there is a target on the first beam on which the reflected beam is received. In this case, in S704, the first communication apparatus may determine the target beam based on the first beam on which the reflected beam is received. For a manner in which the first communication apparatus determines the target beam based on the first beam, refer to related descriptions in the foregoing active sensing.

Optionally, in S701, the first beam used for active sensing may also be determined through BF passive sensing. For implementation, refer to a manner of determining the first beam by using the second beam in BF passive sensing.

As described above, the target beam in S704 may be used for further sensing or may be used for resource selection. FIG. 8B shows a manner in which the first communication apparatus determines the second time-frequency resource based on the target beam. In the manner shown in FIG. 8B, the first communication apparatus may perform random resource selection based on the target beam, to determine the second time-frequency resource. It should be understood that, in S704, when performing random resource selection, the first communication apparatus may perform selection from the available time-frequency resource determined through BF passive sensing.

If the first beam in S701 is determined through BF passive sensing, that is, determined in the manner shown in FIG. 8B, there may be the following two cases in a sequence of active sensing and BF passive sensing.

Case 1: BF passive sensing is performed first, and then active sensing is performed.

The first communication apparatus may listen to the first information based on the second beam, to determine the first time-frequency resource. After listening to the first information based on all the second beams, the first communication apparatus may send the first beam on the first time-frequency resource, to perform active sensing. In other words, the third time window is located before the second time window in time domain. In the embodiment shown in FIG. 8B, description is given by using an example in which the first communication apparatus first performs BF passive sensing based on the second beam and then performs active sensing based on the first beam.

Case 2: BF passive sensing and active sensing occurs alternately.

The first communication apparatus may listen to the first information based on the second beam, to determine the first time-frequency resource. The first communication apparatus may send the first beam corresponding to the second beam on which the first information is not detected, to perform active sensing. The first communication apparatus may send the first beam on the first time-frequency resource, or may randomly select a time-frequency resource to send the first beam. In other words, the third time window and the second time window alternately appear in time domain. It should be understood that, that the third time window and the second time window alternately appear in time domain does not necessarily mean that one third time window is followed by one second time window and one second time window is followed by one third time window. That the third time window and the second time window alternately appear in time domain may mean that there is a second time window after the third time window, and there may be a third time window after the second time window. For example, there is one second time window after two third time windows, and there are three third time windows after the second time window. This may also be referred to as that the third time window and the second time window appear alternately in time domain.

Refer to FIG. 8C. The first communication apparatus listens to the first information based on one second beam, and determines an available time-frequency resource. If the first communication apparatus detects the first information on the second beam, the first communication apparatus may obtain a next second beam through polling, and listen to the first information based on the second beam. If the first communication apparatus does not detect the first information on the one second beam, the first communication apparatus may send a first beam corresponding to the one second beam. The rest may be deduced by analogy until BF passive sensing and active sensing are completed.

Similarly, in FIG. 8C, description is given by using an example in which the target beam is used for resource selection.

In case 1, the first communication apparatus first listens to the first information based on all second beams, and then performs active sensing based on all first beams. This can improve active sensing performance. In other words, the first communication apparatus may detect a potential target by using all first beams. In addition, because the first time-frequency resource used for sending the first beam during active sensing is determined through BF passive sensing, interference caused by the first beam to another communication apparatus can be reduced, and interference caused to the reflected beam of the first beam can also be reduced.

In case 2, the first communication apparatus may alternately perform BF passive sensing and active sensing, and perform active sensing based on the first beam corresponding to the second beam on which the first information is not detected, so that a delay of an active sensing process can be reduced.

In a possible implementation, the target beam in S704 may be further used for further sensing, for example, BF passive sensing, to determine the second time-frequency resource. For example, the first communication apparatus may listen to the first information based on the target beam, and determine an occupied time-frequency resource, for example, the third time-frequency resource. The first communication apparatus may determine the second time-frequency resource based on the third time-frequency resource. For details, refer to related descriptions in BF passive sensing. Details are not described herein again.

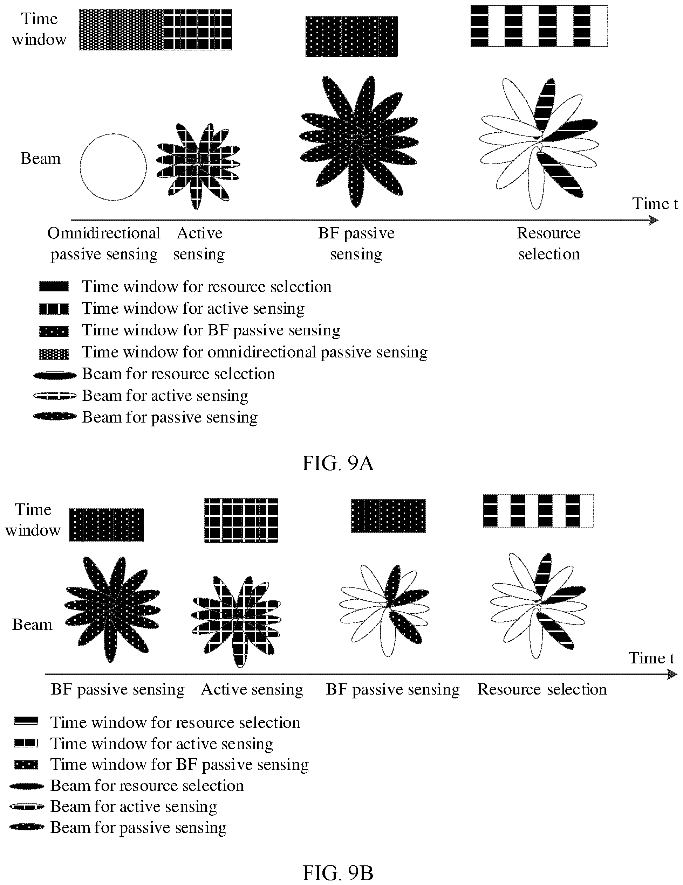

Refer to FIG. 9A. The first communication apparatus performs omnidirectional passive sensing in the first time window, to determine an occupied time-frequency resource, for example, the third time-frequency resource. The first communication apparatus may determine the first time-frequency resource in S701 based on the third time-frequency resource. By using S702 and S703, the first communication apparatus may send the first beam on the first time-frequency resource in the second time window, to perform active sensing. The first communication apparatus may listen to the reflected beam of the first beam, to determine the target beam. In S704, the first communication apparatus may listen to the first information in the third time window based on the target beam, to determine an occupied time-frequency resource in a target beam direction, for example, the third time-frequency resource. The first communication apparatus may determine an available time-frequency resource in the target beam direction based on the third time-frequency resource. Therefore, the first communication apparatus may perform communication based on the available time-frequency resource in the target beam direction and the target beam.

In comparison with embodiments shown in FIG. 8A to FIG. 8C, in the embodiment shown in FIG. 9A, the target beam may be used for further sensing. In other words, the first communication apparatus may perform BF passive sensing based on the target beam, to determine an available time-frequency resource in the target beam direction. Even if a target in the target beam direction is relatively far away from the first communication apparatus, the first communication apparatus may also determine, through BF passive sensing, the third time-frequency resource occupied by transmission information of the target. Therefore, the second time-frequency resource determined based on FIG. 9A has less interference than the second time-frequency resource determined through random resource selection.

Refer to FIG. 9B. The first communication apparatus may listen to the first information in the third time window based on the second beam, and determine an occupied time-frequency resource, for example, the third time-frequency resource. Based on the third time-frequency resource, the first communication apparatus may determine an available time-frequency resource, for example, the first time-frequency resource in S701. The first communication apparatus may listen to the first information based on all second beams, and determine an available time-frequency resource in each beam direction. By using S702 and S703, the first communication apparatus sends the first beam on the first time-frequency resource in the second time window, to perform active sensing. The first communication apparatus may listen to the reflected beam of the first beam, to determine the target beam. In S704, the first communication apparatus may listen to the first information in the third time window based on the target beam, to determine an occupied time-frequency resource in a target beam direction, for example, the third time-frequency resource. The first communication apparatus may determine an available time-frequency resource in the target beam direction based on the third time-frequency resource. Therefore, the first communication apparatus may perform communication based on the available time-frequency resource in the target beam direction and the target beam.

In comparison with the embodiment shown in FIG. 9A, in the embodiment shown in FIG. 9B, the first time-frequency resource used for sending the first beam is determined based on BF passive sensing. Therefore, the first time-frequency resource has less interference. In addition, in comparison with omnidirectional passive sensing, overheads of performing BF passive sensing by the first communication apparatus are lower, and power consumption of the first communication apparatus can be reduced. After active sensing, the first communication apparatus may determine the occupied time-frequency resource again through BF passive sensing. Therefore, a potential occupied time-frequency resource in the target beam direction may be determined a plurality of times. Therefore, the determined second time-frequency resource has relatively small interference.

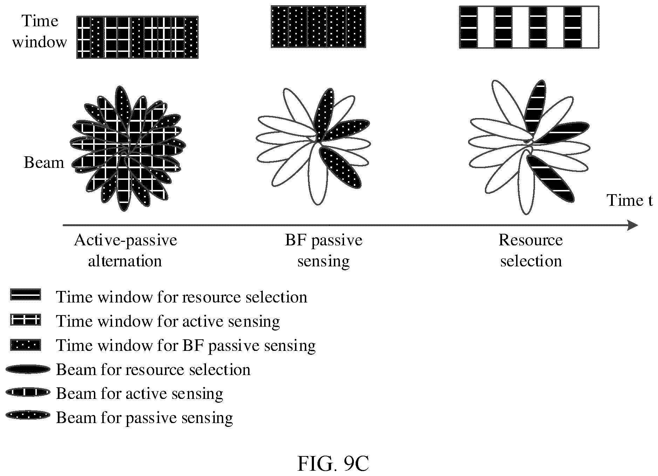

Refer to FIG. 9C. The first communication apparatus performs BF passive sensing and active sensing in the second time window and the third time window that alternately appear in time domain. In other words, the first communication apparatus alternately performs BF passive sensing and active sensing, to determine the target beam. The first communication apparatus may listen to the first information in the third time window based on the target beam, to determine an occupied time-frequency resource in the target beam direction, for example, the third time-frequency resource. The first communication apparatus may determine an available time-frequency resource in the target beam direction based on the third time-frequency resource. Therefore, the first communication apparatus may perform communication based on the available time-frequency resource in the target beam direction and the target beam.

In comparison with the embodiment shown in FIG. 9B, in the embodiment shown in FIG. 9C, the first communication apparatus may alternately perform BF passive sensing and active sensing, so that a delay of an active sensing process can be reduced.

In this embodiment of this application, a beam used for active sensing, for example, the first beam, and a beam used for passive sensing, for example, the second beam and/or the target beam, may use different frequencies. For example, the first beam may be sent at a first frequency, the second beam may be sent at a second frequency, and the first frequency and the second frequency may be different. For example, the first frequency may be higher than the second frequency. Alternatively, the first frequency may be lower than the second frequency.

Optionally, a frequency used for passive sensing before active sensing may be the same as a frequency used for active sensing. For example, the first communication apparatus first performs omnidirectional passive sensing to determine the first time-frequency resource. In this case, when performing active sensing, the first communication apparatus may send the first beam on the first time-frequency resource. In other words, active sensing and omnidirectional passive sensing are performed at a same frequency. Passive sensing after active sensing, such as BF passive sensing, may use different frequencies from active sensing. For example, the first communication apparatus performs active sensing by using the first beam to determine the target beam, and the target beam is used for BF passive sensing. In this case, a frequency of the target beam may be lower than a frequency of the first beam. That is, the target beam corresponds to the first beam.

For a periodic service, the time window in each of the foregoing sensing manners is configured with a corresponding period before resource selection of the periodic service. For example, the period may be the same as a period of the periodic service, and periods of a plurality of periodic services may be configured. For an aperiodic service, the time window in each of the foregoing sensing manners is configured with a corresponding time length before resource selection of the aperiodic service. For example, different time lengths may be configured according to QoS requirements, or different time lengths may be configured based on a plurality of service QoSs.

It should be understood that various combinations of omnidirectional passive sensing, BF passive sensing, and active sensing are merely used as an example for description, and do not constitute a limitation on this embodiment of this application. A person skilled in the art may combine the foregoing omnidirectional passive sensing, BF passive sensing, and active sensing to obtain a technical solution for increasing coverage. For example, the first communication apparatus may combine omnidirectional passive sensing and BF passive sensing, to obtain an available time-frequency resource, for example, the first time-frequency resource. The first communication apparatus may perform active sensing based on the first time-frequency resource and the first beam, to determine the target beam. Omnidirectional passive sensing may determine an occupied time-frequency resource in each direction, while BF passive sensing may determine a time-frequency resource occupied by another communication apparatus that is far away from the first communication apparatus. Therefore, the determined first time-frequency resource has less interference. As described above, the target beam may be used for resource selection or for further sensing.

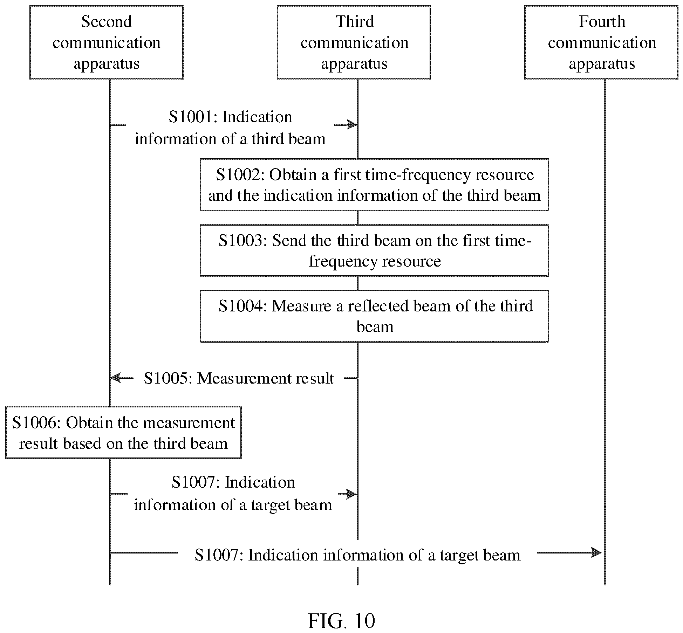

An embodiment of this application further provides another communication method. In this method, to improve transmission reliability, a second communication apparatus may select another communication link for a third communication apparatus, that is, select a fourth communication apparatus for the third communication apparatus, and select, for the third communication apparatus, a target beam for communicating with the fourth communication apparatus. FIG. 10 is an example flowchart of a communication method according to an embodiment of this application. The communication method may include the following operations. In the embodiment shown in FIG. 10, the second communication apparatus may be a network device or a terminal device, and the same is true for the third communication apparatus and the fourth communication apparatus.

S1001: The second communication apparatus sends indication information of a third beam to the third communication apparatus.

The third beam may be used for sensing by the third communication apparatus and/or communication by the third communication apparatus. For example, the third communication apparatus may perform active sensing and/or passive sensing based on the third beam.

S1002: The third communication apparatus obtains the indication information of the third beam and a first time-frequency resource.

For example, by using S1001, the third communication apparatus may receive the indication information of the third beam from the second communication apparatus.

In a possible case, the first time-frequency resource may be randomly selected by the third communication apparatus, or the first time-frequency resource may be determined by the third communication apparatus through omnidirectional passive sensing and/or BF passive sensing. For example, the third communication apparatus may perform omnidirectional passive sensing to determine the first time-frequency resource. For another example, the third communication apparatus may listen to first information based on the third beam, to determine the first time-frequency resource. For an implementation of determining the first time-frequency resource by the third communication apparatus, refer to the first time-frequency resource used during the foregoing active sensing.

In another possible case, the first time-frequency resource may be indicated by the second communication apparatus. For example, the second communication apparatus may send indication information of the first time-frequency resource to the third communication apparatus. For an implementation of determining the first time-frequency resource by the second communication apparatus, refer to the first time-frequency resource used during the foregoing active sensing. For example, the second communication apparatus may perform resource selection based on an available resource pool of the third communication apparatus to determine the first time-frequency resource.

It should be understood that the third communication apparatus may continue to determine an available time-frequency resource from the first time-frequency resource indicated by the second communication apparatus, that is, further listen to the first information, and exclude an occupied time-frequency resource, for example, a third time-frequency resource, from the first time-frequency resource. In this way, the second communication apparatus and the third communication apparatus simultaneously select a resource, so that interference to the fourth communication apparatus and/or another communication apparatus can be minimized.

S1003: The third communication apparatus sends the third beam on the first time-frequency resource.

The third beam herein may be a beam used for active sensing. For implementation, refer to the foregoing first beam. For example, the third beam may include a synchronization beam, a reference signal beam, and/or a pilot beam.

S1004: The third communication apparatus measures a reflected beam of the third beam.

For example, the third communication apparatus may listen to the reflected beam of the third beam. If the reflected beam is detected, the third communication apparatus may measure the reflected beam, to obtain a measurement result of the reflected beam, for example, an RSRP, RSRQ, or an SINR of the reflected beam. If the third communication apparatus receives the reflected beam of the third beam, it may be considered that there is a target in a direction of the third beam, for example, the fourth communication apparatus.

In an example, the third beam may correspond to a fourth beam. The third beam may be a beam used when the third communication apparatus performs passive sensing, for example, BF passive sensing. The fourth beam may be a beam used when the third communication apparatus performs active sensing. In this example, in S1003, the third communication apparatus may send the fourth beam on the first time-frequency resource, and measure a reflected beam of the fourth beam in S1004.

It should be understood that one third beam may correspond to one fourth beam, or one third beam may correspond to a plurality of fourth beams. When one third beam corresponds to a plurality of fourth beams, the third beam may be equivalent to a wide beam, the fourth beam is a narrow beam, and effect of combining the plurality of fourth beams is equivalent to that of one corresponding third beam. Alternatively, the fourth beam may correspond to a third beam on which the first information is not detected. For implementation of a correspondence between the third beam and the fourth beam, refer to a correspondence between the beam used for passive sensing and the beam used for active sensing, for example, a correspondence between the second beam and the first beam. Details are not described herein again.

Optionally, the second communication apparatus may send indication information of a fourth time window to the third communication apparatus. The fourth time window herein is a time window in which the third communication apparatus performs listening based on the third beam. The third communication apparatus listens to the first information in the fourth time window based on the third beam.

Optionally, the second communication apparatus may send indication information of a fifth time window to the third communication apparatus. The fifth time window herein is a time window in which the third communication apparatus performs sensing based on the fourth beam. The third communication apparatus sends the fourth beam in the fifth time window, and listens to or measures the reflected beam of the fourth beam.

S1005: The third communication apparatus sends a measurement result to the second communication apparatus.

In a possible case, the second communication apparatus may send indication information of a feedback resource to the third communication apparatus. The feedback information may be used for sending the measurement result. Therefore, the third communication apparatus may send the measurement result to the second communication apparatus on the feedback resource.

In an example, if the third beam corresponds to the fourth beam, the foregoing result may be a measurement result obtained based on the fourth beam, or may be a measurement result mapped to the third beam. For example, when the third beam is in a one-to-one correspondence with the fourth beam, the third communication apparatus may measure the reflected beam of the fourth beam, to obtain a measurement result. The third communication apparatus may send the measurement result of the reflected beam of the fourth beam to the second communication apparatus. Alternatively, the third communication apparatus may map the fourth beam to the third beam, that is, map the measurement result of the reflected beam of the fourth beam to the measurement result of the third beam, and send the measurement result of the third beam to the second communication apparatus.

For another example, when one third beam corresponds to a plurality of fourth beams, the third communication apparatus may send measurement results of reflected beams of the plurality of fourth beams to the second communication apparatus. Alternatively, the third communication apparatus may map a plurality of fourth beams to the third beam, map measurement results of reflected beams of the plurality of fourth beams to the measurement result of one third beam, and send the measurement result of the third beam to the second communication apparatus. Alternatively, the third communication apparatus may determine a measurement result of one corresponding third beam based on measurement results of reflected beams of a plurality of fourth beams. For example, the first communication apparatus may determine a measurement result of one corresponding third beam in a manner of selecting a maximum measurement result or a minimum measurement result from measurement results of reflected beams of a plurality of fourth beams, or averaging the measurement results of the reflected beams of the plurality of fourth beams. The third communication apparatus may send a determined measurement result of each third beam to the second communication apparatus.

S 1006: The second communication apparatus obtains the measurement result based on the third beam.

For example, by using S1005, the second communication apparatus may receive the measurement result from the third communication apparatus.

S 1007: The second communication apparatus sends indication information of the target beam to the third communication apparatus and the fourth communication apparatus.

Correspondingly, the third communication apparatus and the fourth communication apparatus obtain the indication information of the target beam, for example, receive the indication information of the target beam from the second communication apparatus.

In the solution shown in FIG. 10, because the indication information of the third beam is sent by the second communication apparatus to the third communication apparatus, the third communication apparatus does not need to perform active sensing and/or passive sensing on a configured beam set. In other words, the third communication apparatus may not need to perform blind scanning on the configured beam set, to determine the target beam. This can reduce overheads of the third communication apparatus, and reduce energy consumption of the third communication apparatus.

In a possible case, the indication information of the third beam is determined based on position information of the second communication apparatus, position information of the third communication apparatus, and position information of the fourth communication apparatus.

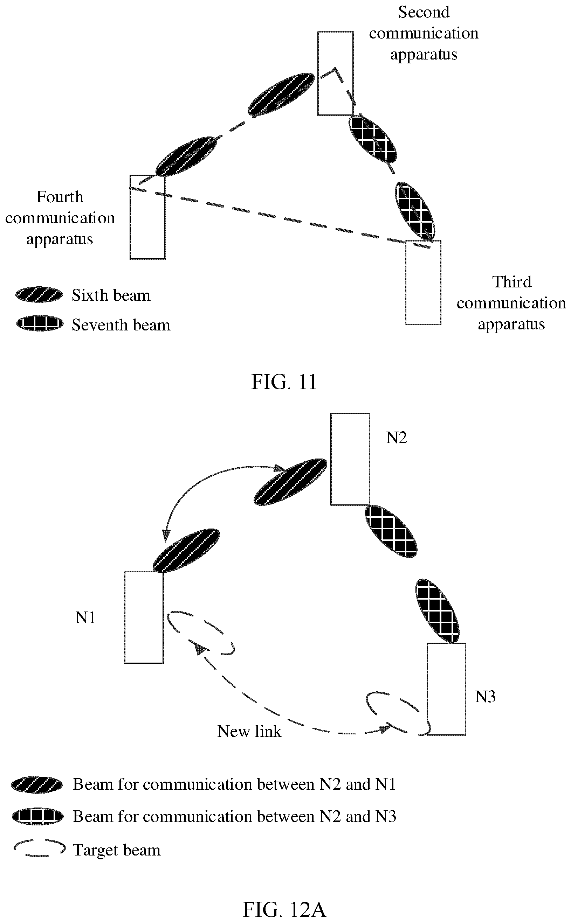

Refer to FIG. 11. It is assumed that there is a communication link between the second communication apparatus and the third communication apparatus, and there is a communication link between the second communication apparatus and the fourth communication apparatus. The second communication apparatus may determine the position information of the third communication apparatus, the position information of the fourth communication apparatus, and the position information of the second communication apparatus. The second communication apparatus may determine, based on the three pieces of position information, the third communication apparatus and a beam direction that the third communication apparatus can use for communication, so that the second communication apparatus may determine the third beam. In other words, the second communication apparatus may use a connection line between the second communication apparatus and the fourth communication apparatus as a side of a triangle, and use a connection line between the second communication apparatus and the third communication apparatus as a second side of the triangle. In this case, the second communication apparatus may determine a remaining side based on the two sides of the triangle. That is, the second communication apparatus may determine an approximate direction of the third beam.

Optionally, the position information of the third communication apparatus may be sent by the third communication apparatus to the second communication apparatus, and the same is true for the position information of the fourth communication apparatus.

In another possible case, the indication information of the third beam is based on a distance between the second communication apparatus and the third communication apparatus, a distance between the second communication apparatus and the fourth communication apparatus, a beam (referred to as a seventh beam) used for communication between the second communication apparatus and the third communication apparatus, and a beam (referred to as a sixth beam) used for communication between the second communication apparatus and the fourth communication apparatus. Refer to FIG. 11. It is assumed that the second communication apparatus communicates with the fourth communication apparatus by using the sixth beam, and the second communication apparatus communicates with the third communication apparatus by using the seventh beam. The second communication apparatus may determine the distance between the second communication apparatus and the third communication apparatus and the distance between the second communication apparatus and the fourth communication apparatus. In this case, the second communication apparatus may determine, based on the two distances and an included angle between the sixth beam and the seventh beam, the third communication apparatus and a beam direction that the third communication apparatus can use for communication, so that the second communication apparatus may determine the third beam. In other words, the second communication apparatus may use a connection line between the second communication apparatus and the fourth communication apparatus as a side of a triangle, and use a connection line between the second communication apparatus and the third communication apparatus as a second side of the triangle. In this case, the second communication apparatus may determine a remaining side based on the two sides of the triangle. That is, the second communication apparatus may determine an approximate direction of the third beam.

Optionally, the distance between the second communication apparatus and the third communication apparatus may be determined by the second communication apparatus based on the position information of the second communication apparatus and the position information of the third communication apparatus, and the same is true for the distance between the second communication apparatus and the fourth communication apparatus. Optionally, the position information of the third communication apparatus may be sent by the third communication apparatus to the second communication apparatus, and the same is true for the position information of the fourth communication apparatus.

The target beam is determined by the second communication apparatus based on the measurement result. For example, the second communication apparatus may select, based on the measurement result, a beam with a largest measurement result as the target beam. A manner in which the second communication apparatus determines the target beam based on the measurement result is not specifically limited in this embodiment of this application. The target beam may correspond to the third beam. For example, the target beam may be one of third beams. Alternatively, a plurality of target beams may correspond to one third beam. In this case, the third beam is a wide beam, and the target beam may be a narrow beam. Alternatively, one target beam may correspond to a plurality of third beams. In this case, the third beam is a narrow beam, and the target beam is a wide beam.

It should be noted that in the embodiment shown in FIG. 11, there is a communication link between the second communication apparatus and the fourth communication apparatus. In a possible case, there is no communication link between the second communication apparatus and the fourth communication apparatus. In other words, the second communication apparatus may have a communication link only with the third communication apparatus. In this case, if the second communication apparatus wants to select another communication link for the third communication apparatus to improve transmission reliability, the second communication apparatus may perform active sensing, to detect the fourth communication apparatus. For example, the second communication apparatus may send a fifth beam, and listen to a reflected beam of the fifth beam. The second communication apparatus may determine the sixth beam based on a reflected beam of the fifth beam. The sixth beam may be used by the second communication apparatus to communicate with the fourth communication apparatus, or the sixth beam may be used by the second communication apparatus to perform further sensing, for example, BF passive sensing. For a beam and a time-frequency resource that are used when the second communication apparatus performs active sensing, refer to the foregoing implementations of the first beam and the first time-frequency resource. In addition, for a process of active sensing by the second communication apparatus, refer to the foregoing process of active sensing by the first communication apparatus. Details are not described herein again.

The following describes the communication method in detail with reference to the accompanying drawings.

Refer to FIG. 12A. N2 is considered as the second communication apparatus, N1 is considered as the fourth communication apparatus, and N3 is considered as the third communication apparatus. It is assumed that N2 and N3 have a communication link, and N2 and N1 also have a communication link. To improve transmission reliability, N2 may select, for N3 and N1, a target beam used for communication. In S1001, N2 may send the indication information of the third beam to N3. By using S1002 to S1004, N3 may perform sensing based on the third beam, for example, perform active sensing and/or BF passive sensing, to determine the measurement result of the third beam. By using S1005, N3 may send the measurement result of the third beam to N2, and by using S1006, N2 may select the target beam for N3 and N1 based on the measurement result of the third beam. For example, N2 may select the beam with a largest value in the measurement result as the target beam for communication between N1 and N3. N2 may send the indication information of the target beam to N1 and N3 by using S 1007. In this way, N1 and N3 may communicate with each other by using the target beam.

In the solution in FIG. 12A, the second communication apparatus may select another communication link for the third communication apparatus, to improve data transmission reliability. Because the indication information of the third beam is sent by the second communication apparatus to the third communication apparatus, the third communication apparatus may not need to perform blind scanning on the configured beam set. This can reduce overheads of the third communication apparatus, and reduce energy consumption of the third communication apparatus.

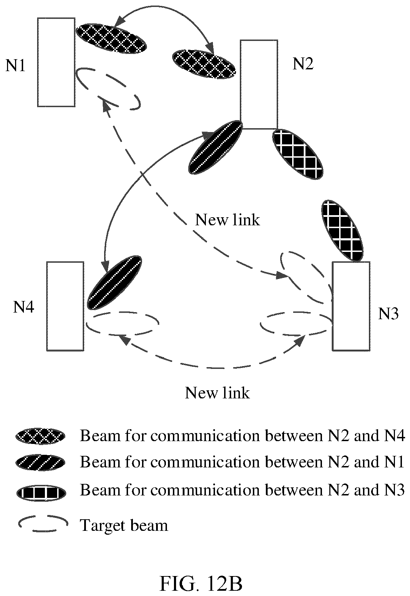

Refer to FIG. 12B. N2 is considered as the second communication apparatus, N1 and N4 are both considered as fourth communication apparatuses, and N3 is considered as the third communication apparatus. It is assumed that N2 and N3 have a communication link, N2 and N4 have a communication link, and N2 and N1 also have a communication link. To improve transmission reliability, N2 selects a communication apparatus from N4 and N1 for communication with N3. By using S1001, N2 may send the indication information of the third beam to N3. The indication information of the third beam sent by N2 may include a beam that may be used when N3 communicates with N4 and a beam that may be used when N3 communicates with N1. In other words, the third beam is used by N3 to perform sensing, for example, perform sensing on N4 and/or N1. By using S1002 to S1004, N3 may perform sensing based on the third beam, for example, perform active sensing and/or BF passive sensing, to determine the measurement result of the third beam. By using S1005, N3 may send the measurement result of the third beam to N2, and by using S1006 and S1007, N2 may select the target beam for N1 based on the measurement result of the third beam. When N2 selects the target beam, it may be considered that N2 has selected a communication apparatus from N4 and N1 for communication with N3. For example, N2 may select the beam with the largest value in the measurement result as the target beam. If the target beam is determined based on the measurement result of the third beam that may be used when N3 communicates with N4, it may be considered that N2 selects N4 for communication with N3. In this case, N2 may send the indication information of the target beam to N3 and N4 by using S1007. In this case, N3 and N4 may communicate with each other by using the target beam. If the target beam is determined based on the measurement result of the third beam that may be used when N3 communicates with N1, it may be considered that N2 selects N1 for communication with N3. In this case, N2 may send the indication information of the target beam to N1 and N3 by using S1007. In this case, N1 and N3 may communicate with each other by using the target beam.

In comparison with the embodiment shown in FIG. 12A, in the embodiment shown in FIG. 12B, the second communication apparatus may select, from a plurality of fourth communication apparatuses, a communication apparatus that communicates with the third communication apparatus. The second communication apparatus may determine, by selecting the target beam, a communication apparatus that communicates with the third communication apparatus.

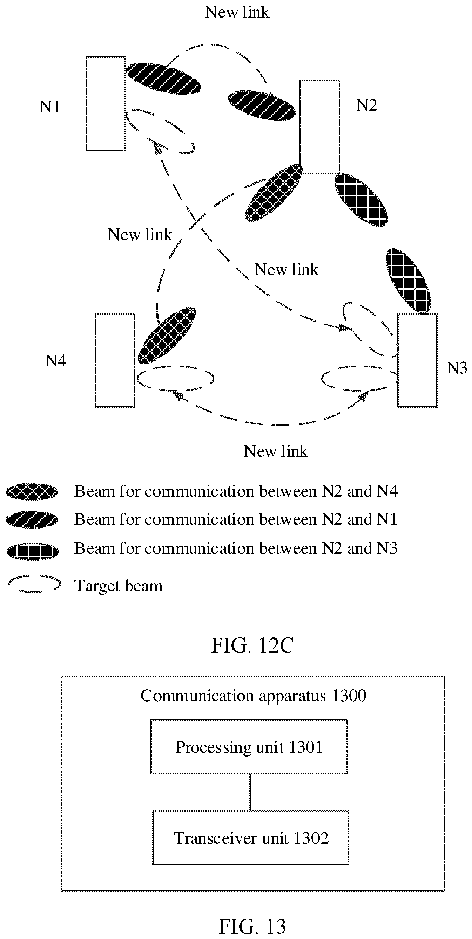

Refer to FIG. 12C. N2 is considered as the second communication apparatus, N1 and N4 are both considered as fourth communication apparatuses, and N3 is considered as the third communication apparatus. It is assumed that there is a communication link between N2 and N3, there is no communication link between N2 and N4, and there is a communication link between N2 and N1. To improve transmission reliability, N2 needs to select another communication apparatus for communication with N3. Before N2 sends the indication information of the third beam to N3, N2 may perform active sensing to detect the target. For a process in which N2 performs active sensing and a beam and a time-frequency resource used for active sensing, refer to a process in which the first communication apparatus performs active sensing and a beam and a time-frequency resource used for active sensing. In this way, N2 may detect N4, and establish a communication link with N4.

Then, in S1001, N2 may send the indication information of the third beam to N3. The indication information of the third beam sent by N2 may include a beam that may be used when N3 communicates with N4 and a beam that may be used when N3 communicates with N1. In other words, the third beam is used by N3 to perform sensing, for example, perform sensing on N4 and/or N1. By using S1002 to S1004, N3 may perform sensing based on the third beam, for example, perform active sensing and/or BF passive sensing, to determine the measurement result of the third beam. By using S1005, N3 may send the measurement result of the third beam to N2, and by using S1006 and S1007, N2 may select the target beam for N1 based on the measurement result of the third beam. When N2 selects the target beam, it may be considered that N2 has selected a communication apparatus from N4 and N1 for communication with N3. For example, N2 may select the beam with the largest value in the measurement result as the target beam. If the target beam is determined based on the measurement result of the third beam that may be used when N3 communicates with N4, it may be considered that N2 selects N4 for communication with N3. In this case, N2 may send the indication information of the target beam to N1 and N4 by using S1007. In this case, N1 and N4 may communicate with each other by using the target beam. If the target beam is determined based on the measurement result of the third beam that may be used when N3 communicates with N1, it may be considered that N2 selects N1 for communication with N3. In this case, N2 may send the indication information of the target beam to N1 and N3 by using S1007. In this case, N1 and N3 may communicate with each other by using the target beam.

It should be noted that, in addition to referring to the measurement result, N2 may further refer to quality of the communication link between N2 and N4 and quality of the communication link between N2 and N1. For example, N2 may first select a minimum value of the quality of the communication link between N2 and N4 and quality of a communication link between N3 and N4, then refer to a minimum value of the quality of the communication link between N2 and N1 and quality of a communication link between N3 and N1, and then select a path with a larger value from the two selected minimum values as a determined path.

In comparison with the embodiment shown in FIG. 12B, in the embodiment shown in FIG. 12C, before sending the indication information of the third beam, the second communication apparatus may perform active sensing to detect the target, for example, the fourth communication apparatus. In this way, the second communication apparatus may select, from the plurality of fourth communication apparatuses, a communication apparatus that communicates with the third communication apparatus. The second communication apparatus may determine, by selecting the target beam, a communication apparatus that communicates with the third communication apparatus.

In the foregoing embodiments, the third communication apparatus (for example, N3) may be a sending node, and the fourth communication apparatus (for example, N1 or N4) may be a destination node. In other words, the third communication apparatus sends information, such as control information and data, to the fourth communication apparatus. In this case, the second communication apparatus may send indication information of a target receive beam in the target beam to the fourth communication apparatus, and send indication information of a target transmit beam in the target beam to the third communication apparatus. In other words, the target beam may be a beam pair, including the target transmit beam and the target receive beam. In this way, the indication information of the target receive beam is sent to the destination node, and the indication information of the target transmit beam is sent to the sending node, so that transmission resources can be reduced.

In another example, the third communication apparatus (for example, N3) may be a destination node, and the fourth communication apparatus (for example, N1 or N4) may be a sending node. In other words, the third communication apparatus receives information, such as control information and data, from the fourth communication apparatus. In this case, the second communication apparatus may send indication information of a target receive beam in the target beam to the third communication apparatus, and send indication information of a target transmit beam in the target beam to the fourth communication apparatus. In other words, the target beam may be a beam pair, including the target transmit beam and the target receive beam.

In comparison with a manner in which the second communication apparatus sends the indication information of the third beam to the sending node to enable the sending node to perform sensing, and the second communication apparatus sends the indication information of the third beam to the destination node to enable the destination node to perform sensing, a measurement result obtained by the second communication apparatus is more consistent with a measurement result of a beam received by the destination node, and can better reflect quality and an interference status when the destination node receives the beam.

Based on a same concept, with reference to FIG. 13, an embodiment of this application provides a communication apparatus 1300. The apparatus 1300 includes a processing unit 1301 and a transceiver unit 1302. The apparatus 1300 may be a first communication apparatus, or may be an apparatus that is used in a first communication apparatus and that can support the first communication apparatus in performing a communication method. Alternatively, the apparatus 1300 may be a second communication apparatus, or may be an apparatus that is used in a second communication apparatus and that can support the second communication apparatus in performing a method. Alternatively, the apparatus 1300 may be a third communication apparatus, or may be an apparatus that is used in a third communication apparatus and that can support the third communication apparatus in performing a method.

The transceiver unit may also be referred to as a transceiver module, a transceiver, a transceiver, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation on a terminal device side or a network device side in the foregoing method embodiments, and a component that is in the transceiver unit and that is configured to implement a sending function is considered as a sending unit. In other words, the transceiver unit includes the receiving unit and the sending unit. When the apparatus 1300 is used in the first communication apparatus, the receiving unit included in the transceiver unit 1302 of the apparatus 1300 is configured to perform a receiving operation on a first communication apparatus side, for example, obtain a first time-frequency resource and a first beam; and the sending unit included in the transceiver unit 1302 of the apparatus 1300 is configured to perform a sending operation on a first time-frequency resource side and a first beam side, for example, send the first beam. When the apparatus 1300 is used in the second communication apparatus, the receiving unit included in the transceiver unit 1302 of the apparatus 1300 is configured to perform a receiving operation on a second communication apparatus side, for example, obtain a measurement result. Specifically, the receiving unit may receive a measurement result from the third communication apparatus. The sending unit included in the transceiver unit 1302 of the apparatus 1300 is configured to perform a sending operation on the second communication apparatus side, for example, send indication information of a third beam. Specifically, the sending unit may send the indication information of the third beam to the third communication apparatus. When the apparatus 1300 is used in the third communication apparatus, the receiving unit included in the transceiver unit 1302 of the apparatus 1300 is configured to perform a receiving operation on a third communication apparatus side, for example, obtain the indication information of the third beam. Specifically, the receiving unit may receive the indication information of the third beam from the second communication apparatus. The sending unit included in the transceiver unit 1302 of the apparatus 1300 is configured to perform a sending operation on the third communication apparatus side, for example, send a measurement result. Specifically, the sending unit may send the measurement result to the second communication apparatus.

In addition, it should be noted that, if the apparatus is implemented by using a chip/chip circuit, the transceiver unit may be an input/output circuit and/or a communication interface, and perform an input operation (corresponding to the foregoing receiving operation) and an output operation (corresponding to the foregoing sending operation); and the processing unit is an integrated processor, a microprocessor, or an integrated circuit.

The following describes in detail an implementation in which the apparatus 1300 is used in the first communication apparatus, the second communication apparatus, or the third communication apparatus.

For example, operations performed by units of the apparatus 1300 used in the first communication apparatus are described in detail.

The transceiver unit 1302 is configured to: obtain a first time-frequency resource and a first beam, and send the first beam on the first time-frequency resource, where the first beam is used for sensing. The processing unit 1301 is configured to: determine a target beam from the first beam based on a reflected beam of the first beam, and determine a second time-frequency resource based on the target beam. The target beam corresponds to a first beam on which the reflected beam is received. For the first time-frequency resource, the first beam, the target beam, and the second time-frequency resource, refer to related descriptions in the method embodiment shown in FIG. 7.

For example, operations performed by units of the apparatus 1300 used in the second communication apparatus are described in detail.

The transceiver unit 1302 is configured to send indication information of a third beam to a third communication apparatus. The third beam is used for at least one of the following: communication by the third communication apparatus and sensing by the third communication apparatus. The transceiver unit 1302 is further configured to obtain a measurement result based on the third beam. The processing unit 1301 is configured to determine a target beam based on the measurement result. The transceiver unit 1302 is further configured to send indication information of the target beam to the third communication apparatus and a fourth communication apparatus. The target beam is determined based on the measurement result, the target beam corresponds to the third beam, and the target beam is used for communication between the third communication apparatus and the fourth communication apparatus. For the third beam, the measurement result, and the target beam, refer to related descriptions in the method embodiment shown in FIG. 10.

For example, operations performed by units of the apparatus 1300 used in the third communication apparatus are described in detail.

The transceiver unit 1302 is configured to obtain indication information of a third beam and a first time-frequency resource. The third beam is used for at least one of the following: communication by the third communication apparatus and sensing by the third communication apparatus. The transceiver unit 1302 is further configured to send the third beam on the first time-frequency resource. The processing unit 1301 is configured to measure a reflected beam of the third beam, to obtain a measurement result of the reflected beam of the third beam. The transceiver unit 1302 is further configured to send the measurement result to a second communication apparatus. For the third beam, the measurement result, and the target beam, refer to related descriptions in the method embodiment shown in FIG. 10.

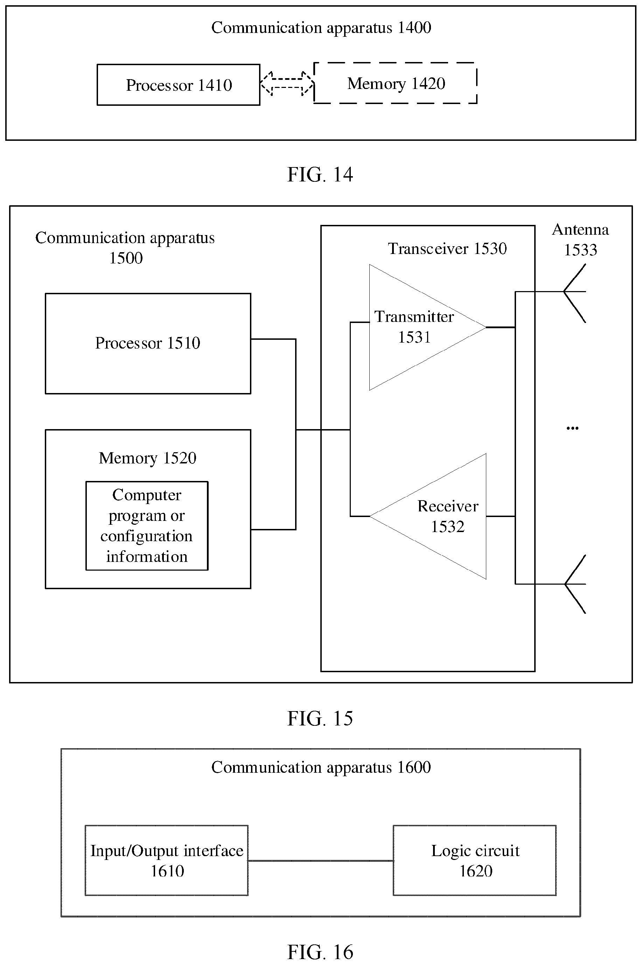

Based on a same concept, as shown in FIG. 14, an embodiment of this application provides a communication apparatus 1400. The communication apparatus 1400 includes a processor 1410. Optionally, the communication apparatus 1400 may further include a memory 1420, configured to store instructions executed by the processor 1410, or store input data required by the processor 1410 to run instructions, or store data generated after the processor 1410 runs instructions. The processor 1410 may implement the method shown in the foregoing method embodiment by using the instructions stored in the memory 1420.

Based on a same concept, as shown in FIG. 15, an embodiment of this application provides a communication apparatus 1500. The communication apparatus 1500 may be a chip or a chip system. Optionally, in this embodiment of this application, the chip system may include a chip, or may include the chip and other discrete devices.

The communication apparatus 1500 may include at least one processor 1510. The processor 1510 is coupled to a memory. Optionally, the memory may be located inside the apparatus, or may be located outside the apparatus. For example, the communication apparatus 1500 may further include at least one memory 1520. The memory 1520 stores a computer program, configuration information, a computer program or instructions, and/or data necessary for implementing any one of the foregoing embodiments. The processor 1510 may execute the computer program stored in the memory 1520, to complete the method in any one of the foregoing embodiments.

The coupling in this embodiment of this application is indirect coupling or a communication connection between apparatuses, units, or modules, may be in electrical, mechanical or other forms, and is used for information exchange between apparatuses, units or modules. The processor 1510 may cooperate with the memory 1520. In this embodiment of this application, a specific connection medium between the transceiver 1530, the processor 1510, and the memory 1520 is not limited.

The communication apparatus 1500 may further include a transceiver 1530, and the communication apparatus 1500 may exchange information with another device by using the transceiver 1530. The transceiver 1530 may be a circuit, a bus, a transceiver, or any other apparatus that can be configured to exchange information, or may be referred to as a signal transceiver unit. As shown in FIG. 15, the transceiver 1530 includes a transmitter 1531, a receiver 1532, and an antenna 1533. In addition, when the communication apparatus 1500 is a chip-type apparatus or circuit, the transceiver in the communication apparatus 1500 may also be an input/output circuit and/or a communication interface, and may input data (or referred to as receiving data) and output data (or referred to as sending data). The processor is an integrated processor, a microprocessor, or an integrated circuit, and the processor may determine output data based on the input data.

In a possible implementation, the communication apparatus 1500 may be used in a first communication apparatus. Specifically, the communication apparatus 1500 may be the first communication apparatus, or may be an apparatus that can support the first communication apparatus in implementing a function of the first communication apparatus in any one of the foregoing embodiments. The memory 1520 stores a necessary computer program, a computer program or instructions, and/or data for implementing the function of the first communication apparatus in any one of the foregoing embodiments. The processor 1510 may execute the computer program stored in the memory 1520, to complete the method performed by the first communication apparatus in any one of the foregoing embodiments. Used in the first communication apparatus, the transmitter 1531 in the communication apparatus 1500 may be configured to transmit a first beam by using the antenna 1533, and the receiver 1532 may be configured to receive a reflected beam of the first beam by using the antenna 1533.

In another possible implementation, the communication apparatus 1500 may be used in a second communication apparatus. Specifically, the communication apparatus 1500 may be the second communication apparatus, or may be an apparatus that can support the second communication apparatus in implementing a function of the second communication apparatus in any one of the foregoing embodiments. The memory 1520 stores a necessary computer program, a computer program or instructions, and/or data for implementing the function of the second communication apparatus in any one of the foregoing embodiments. The processor 1510 may execute the computer program stored in the memory 1520, to complete the method performed by the second communication apparatus in any one of the foregoing embodiments. Used in the second communication apparatus, the receiver 1532 in the communication apparatus 1500 may be configured to obtain a measurement result by using the antenna 1533, and the transmitter 1531 may be configured to send indication information of a third beam to a third communication apparatus by using the antenna 1533.

In another possible implementation, the communication apparatus 1500 may be used in a third communication apparatus. Specifically, the communication apparatus 1500 may be the third communication apparatus, or may be an apparatus that can support the third communication apparatus in implementing a function of the third communication apparatus in any one of the foregoing embodiments. The memory 1520 stores a necessary computer program, a computer program or instructions, and/or data for implementing the function of the third communication apparatus in any one of the foregoing embodiments. The processor 1510 may execute the computer program stored in the memory 1520, to complete the method performed by the third communication apparatus in any one of the foregoing embodiments. Used in the third communication apparatus, the receiver 1532 in the communication apparatus 1500 may be configured to obtain indication information of a third beam by using the antenna 1533, and the transmitter 1531 may be configured to send a measurement result to a second communication apparatus by using the antenna 1533.

The communication apparatus 1500 provided in this embodiment may be used in the first communication apparatus to complete the method performed by the first communication apparatus, or may be used in the second communication apparatus to complete the method performed by the second communication apparatus, or may be used in the third communication apparatus to complete the method performed by the third communication apparatus. Therefore, for technical effects that can be achieved by the apparatus, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory) such as a random access memory (random-access memory, RAM). The memory may alternatively be any other medium that can be configured to carry or store expected program code in a form of instructions or a data structure and that can be accessed by a computer. This is not limited thereto. The memory in this embodiment of this application may alternatively be a circuit or any other apparatus that can implement a storage function, and is configured to store the computer program, the program instructions, and/or the data.

Based on the foregoing embodiments, with reference to FIG. 16, an embodiment of this application further provides another communication apparatus 1600, including an input/output interface 1610 and a logic circuit 1620. The input/output interface 1610 is configured to receive code instructions and transmit the code instructions to the logic circuit 1620. The logic circuit 1620 is configured to run the code instructions to perform the method performed by a first communication apparatus, a second communication apparatus, or a third communication apparatus in any one of the foregoing embodiments.

The following describes in detail operations performed by the communication apparatus used in the first communication apparatus, the second communication apparatus, or the third communication apparatus.

In an optional implementation, the communication apparatus 1600 may be used in a first communication apparatus, to perform the method performed by the first communication apparatus, specifically, for example, the method performed by the first communication apparatus in the embodiment shown in FIG. 7. The logic circuit 1620 is configured to obtain a first time-frequency resource and a first beam. The input/output interface 1610 is configured to output the first beam on the first time-frequency resource. The first beam is used for sensing. The logic circuit 1620 is further configured to: determine a target beam based on a reflected beam of the first beam; and determine a second time-frequency resource based on the target beam. The target beam corresponds to a first beam on which the reflected beam is received.

In another optional implementation, the communication apparatus 1600 may be used in a second communication apparatus, to perform the method performed by the second communication apparatus, specifically, for example, the method performed by the second communication apparatus in the method embodiment shown in FIG. 10. The input/output interface 1610 is configured to send indication information of a third beam to a third communication apparatus. The third beam is used for at least one of the following: communication by the third communication apparatus and sensing by the third communication apparatus. The input/output interface 1610 is further configured to input a measurement result. The logic circuit 1620 is configured to determine a target beam based on the measurement result. The input/output interface 1610 is further configured to send indication information of the target beam to the third communication apparatus and a fourth communication apparatus. The target beam is determined based on the measurement result, the target beam corresponds to the third beam, and the target beam is used for communication between the third communication apparatus and the fourth communication apparatus.

In another optional implementation, the communication apparatus 1600 may be used in a third communication apparatus, to perform the method performed by the third communication apparatus, specifically, for example, the method performed by the third communication apparatus in the method embodiment shown in FIG. 10. The input/output interface 1610 is configured to input indication information of a third beam and a first time-frequency resource. The third beam is used for at least one of the following: communication by the third communication apparatus and sensing by the third communication apparatus. The input/output interface 1610 is further configured to output the third beam on the first time-frequency resource. The logic circuit 1620 is configured to measure a reflected beam of the third beam, to obtain a measurement result of the reflected beam of the third beam. The input/output interface 1610 is further configured to output the measurement result to a second communication apparatus.

The communication apparatus 1600 provided in this embodiment may be used in the first communication apparatus to perform the method performed by the first communication apparatus, or used in the second communication apparatus to complete the method performed by the second communication apparatus, or used in the third communication apparatus to complete the method performed by the third communication apparatus. Therefore, for technical effects that can be achieved by the apparatus, refer to the foregoing method embodiments. Details are not described herein again.

Based on the foregoing embodiments, an embodiment of this application further provides a communication system. The system includes at least one communication apparatus used in a first communication apparatus and at least one communication apparatus used in another communication apparatus. Therefore, for technical effects that can be achieved by the system, refer to the foregoing method embodiments. Details are not described herein again.

Based on the foregoing embodiments, an embodiment of this application further provides a communication system. The communication system includes at least one communication apparatus used in a second communication apparatus and at least one communication apparatus used in a third communication apparatus. Therefore, for technical effects that can be achieved by the system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include: any medium that can store program code, such as a USB flash drive, a removable hard disk, a read-only memory, a random access memory, a magnetic disk, or an optical disc.

To implement functions of communication apparatuses in FIG. 13 to FIG. 16, an embodiment of this application further provides a chip, including a processor, configured to support the communication apparatus in implementing functions related to the transmit end or the receive end in the foregoing method embodiments. In a possible design, the chip is connected to a memory or the chip includes the memory, and the memory is configured to store a computer program or instructions and data that are necessary for the communication apparatus.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that each procedure and/or block in the flowcharts and/or block diagrams, and combinations of the procedures and/or blocks in the flowcharts and/or block diagrams may be implemented by a computer program or instructions. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this way, this application is intended to cover these modifications and variations provided that the modifications and variations of embodiments of this application fall within the scope of the claims of this application and equivalent technologies thereof.

## Claims

1. A communication method, wherein the method is applied to a first communication apparatus, and the method comprises:
obtaining a first time-frequency resource and a first beam, wherein the first beam is used for sensing;
sending the first beam on the first time-frequency resource;
determining a target beam based on a reflected beam of the first beam, wherein the target beam corresponds to a first beam on which the reflected beam is received; and
determining a second time-frequency resource based on the target beam.

2. The method according to claim 1, wherein the target beam is used for competitive resource selection.

3. The method according to claim 1 or 2, wherein the obtaining a first time-frequency resource comprises:
listening to first information in a first time window, wherein the first information is used for determining an occupied third time-frequency resource, wherein
the first time-frequency resource does not comprise the third time-frequency resource.

4. The method according to any one of claims 1 to 3, wherein the first beam is a preconfigured beam.

5. The method according to claim 3, wherein the listening to first information in a first time window comprises:
listening to the first information in the first time window based on a second beam, wherein the second beam corresponds to the first beam.

6. The method according to claim 5, wherein a second beam on which the first information is not detected corresponds to the first beam.

7. The method according to claim 5 or 6, wherein the first time-frequency resource is located in a second time window in time domain; and
the first time window and the second time window alternately appear in time domain; or the first time window is located before the second time window in time domain.

8. The method according to claim 7, wherein a length of the first time window is directly proportional to a quantity of second beams, and/or a length of the second time window is directly proportional to a quantity of first beams.

9. The method according to any one of claims 1 to 8, wherein the determining a second time-frequency resource based on the target beam comprises:
listening to the first information based on the target beam, wherein the first information is used for determining the occupied third time-frequency resource, wherein
the second time-frequency resource does not comprise the third time-frequency resource.

10. The method according to any one of claims 3 to 8, wherein a time window is related to a priority of a service.

11. The method according to claim 1, wherein the second time-frequency resource is used for communication.

12. The method according to claim 1, wherein at least one of the following is randomly selected: the first time-frequency resource and the second time-frequency resource.

13. The method according to any one of claims 1 to 12, wherein a frequency of the first time-frequency resource is different from a frequency of the second time-frequency resource.

14. A communication method, comprising:
sending, by a second communication apparatus, indication information of a third beam to a third communication apparatus, wherein the third beam is used for at least one of the following: communication by the third communication apparatus and sensing by the third communication apparatus;
obtaining, by the second communication apparatus, a measurement result based on the third beam; and
sending, by the second communication apparatus, indication information of a target beam to the third communication apparatus and a fourth communication apparatus, wherein the target beam is determined based on the measurement result, the target beam corresponds to the third beam, and the target beam is used for communication between the third communication apparatus and the fourth communication apparatus.

15. The method according to claim 14, further comprising:
sending, by the second communication apparatus, indication information of a first time-frequency resource to the third communication apparatus, wherein the first time-frequency resource is used for transmitting the third beam.

16. The method according to claim 14 or 15, further comprising:
sending, by the second communication apparatus, indication information of a feedback resource to the third communication apparatus; and
obtaining, by the second communication apparatus, the measurement result on the feedback resource.

17. The method according to any one of claims 14 to 16, wherein the third beam corresponds to a fourth beam, and the fourth beam is used for sensing.

18. The method according to claim 17, wherein the obtaining, by the second communication apparatus, a measurement result based on the third beam comprises:
obtaining, by the second communication apparatus, the measurement result based on the fourth beam.

19. The method according to any one of claims 14 to 18, further comprising:
sending, by the second communication apparatus, indication information of a fourth time window to the third communication apparatus, wherein the fourth time window is a time window in which the third communication apparatus performs listening based on the third beam.

20. The method according to claim 17, further comprising:
sending, by the second communication apparatus, indication information of a fifth time window to the third communication apparatus, wherein the fifth time window is a time window in which the third communication apparatus performs sensing based on the fourth beam, or the fifth time window is a time window in which the third communication apparatus performs communication and sensing based on the fourth beam.

21. The method according to any one of claims 14 to 20, further comprising:
sending, by the second communication apparatus, a fifth beam; and
determining, by the second communication apparatus, a sixth beam based on a reflected beam of the fifth beam, wherein the sixth beam is used for at least one of the following: communication by the second communication apparatus and sensing by the second communication apparatus.

22. The method according to claim 21, wherein the indication information of the third beam is determined based on position information of the second communication apparatus, position information of the third communication apparatus, and position information of the fourth communication apparatus; or the indication information of the third beam is determined based on a distance between the second communication apparatus and the third communication apparatus, a distance between the second communication apparatus and the fourth communication apparatus, and an included angle between a beam used for communication between the second communication apparatus and the third communication apparatus and a beam used for communication between the second communication apparatus and the fourth communication apparatus.

23. A communication method, comprising:
obtaining, by a third communication apparatus, indication information of a third beam and a first time-frequency resource, wherein the third beam is used for at least one of the following: communication by the third communication apparatus and sensing by the third communication apparatus;
sending, by the third communication apparatus, the third beam on the first time-frequency resource;
measuring, by the third communication apparatus, a reflected beam of the third beam, to obtain a measurement result of the reflected beam of the third beam; and
sending, by the third communication apparatus, the measurement result to a second communication apparatus.

24. The method according to claim 23, further comprising:
obtaining, by the third communication apparatus, indication information of a target beam, wherein the target beam is determined based on the measurement result, the target beam corresponds to the third beam, and the target beam is used for communication between the third communication apparatus and a fourth communication apparatus.

25. The method according to claim 23 or 24, further comprising:
obtaining, by the third communication apparatus, indication information of a feedback resource; and
sending, by the third communication apparatus, the measurement result to the second communication apparatus on the feedback resource.

26. The method according to claim 23, further comprising:
listening to, by the third communication apparatus, first information on the third beam, wherein the first information is used for determining an occupied third time-frequency resource, wherein
the first time-frequency resource does not comprise the third time-frequency resource.

27. The method according to claim 26, wherein the third beam corresponds to a fourth beam, and the fourth beam is used for sensing.

28. The method according to claim 27, wherein the sending, by the third communication apparatus, the third beam on the first time-frequency resource comprises:
sending, by the third communication apparatus, the fourth beam on the first time-frequency resource; and
the measuring, by the third communication apparatus, a reflected signal of the third beam, to obtain a measurement result of the reflected signal of the third beam comprises:
measuring, by the third communication apparatus, a reflected signal of the fourth beam, to obtain a measurement result of the reflected signal of the fourth beam.

29. The method according to claim 26, further comprising:
obtaining, by the third communication apparatus, indication information of a fourth time window, wherein the fourth time window is a time window in which the third communication apparatus performs listening based on the third beam.

30. The method according to claim 28, further comprising:
obtaining, by the third communication apparatus, indication information of a fifth time window, wherein the indication information of the fifth time window is duration for which the third communication apparatus performs sensing based on the fourth beam, or the fifth time window is a time window in which the third communication apparatus performs communication and sensing based on the fourth beam.

31. The method according to any one of claims 23 to 30, wherein the target beam comprises a target transmit beam and a target receive beam; and
the obtaining, by the third communication apparatus, indication information of the target beam comprises:
obtaining, by the third communication apparatus, indication information of the target transmit beam; and
obtaining, by the third communication apparatus, indication information of the target receive beam.

32. A communication apparatus, comprising a processing unit and a transceiver unit, wherein
the transceiver unit is configured to: obtain a first time-frequency resource and a first beam, wherein the first beam is used for sensing; and send the first beam on the first time-frequency resource; and
the processing unit is configured to: determine a target beam from the first beam based on a reflected beam of the first beam, wherein the target beam corresponds to a first beam on which the reflected beam is received; and determine a second time-frequency resource based on the target beam.

33. A communication apparatus, comprising a processing unit and a transceiver unit, wherein
the transceiver unit is configured to send indication information of a third beam to a third communication apparatus, wherein the third beam is used for at least one of the following: communication by the third communication apparatus and sensing by the third communication apparatus; and the second communication apparatus obtains a measurement result based on the third beam;
the processing unit is configured to determine a target beam based on the measurement result, wherein the target beam corresponds to the third beam, and the target beam is used for communication between the third communication apparatus and a fourth communication apparatus; and
the transceiver unit is further configured to send indication information of the target beam to the third communication apparatus and the fourth communication apparatus.

34. A communication apparatus, comprising a processing unit and a transceiver unit, wherein
the transceiver unit is configured to: obtain indication information of a third beam and a first time-frequency resource, wherein the third beam is used for at least one of the following: communication by a third communication apparatus and sensing by the third communication apparatus; and send the third beam on the first time-frequency resource;
the processing unit is configured to measure a reflected signal of the third beam, to obtain a measurement result of the reflected signal of the third beam; and
the transceiver unit is further configured to send the measurement result to a second communication apparatus.

35. A communication apparatus, comprising at least one processor, wherein the processor is coupled to a memory;
the memory is configured to store a computer program or instructions; and
the processor is configured to execute the computer program or instructions, to implement the method according to any one of claims 1 to 13, or implement the method according to any one of claims 14 to 22, or implement the method according to any one of claims 23 to 31.

36. A communication apparatus, comprising a logic circuit and an input/output interface, wherein
the logic circuit is configured to obtain a first time-frequency resource and a first beam, wherein the first beam is used for sensing;
the input/output interface is configured to output the first beam on the first time-frequency resource; and
the logic circuit is further configured to: determine a target beam based on a reflected beam of the first beam; and determine a second time-frequency resource based on the target beam, wherein the target beam corresponds to the first beam on which the reflected beam is received.

37. A communication apparatus, comprising a logic circuit and an input/output interface, wherein
the input/output interface is configured to: send indication information of a third beam to a third communication apparatus, and obtain a measurement result based on the third beam, wherein the third beam is used for at least one of the following: communication by the third communication apparatus and sensing by the third communication apparatus;
the logic circuit is configured to determine a target beam based on the measurement result, wherein the target beam is determined based on the measurement result, the target beam corresponds to the third beam, and the target beam is used for communication between the third communication apparatus and the fourth communication apparatus; and
the input/output interface is further configured to send indication information of the target beam to the third communication apparatus and the fourth communication apparatus.

38. A communication apparatus, comprising a logic circuit and an input/output interface, wherein
the input/output interface is configured to: obtain indication information of a third beam and a first time-frequency resource; and send the third beam on the first time-frequency resource, wherein the third beam is used for at least one of the following: communication by the communication apparatus and sensing by the communication apparatus;
the logic circuit is configured to measure a reflected beam of the third beam, to obtain a measurement result of the reflected beam of the third beam; and
the input/output interface is further configured to output the measurement result to a second communication apparatus.

39. A computer-readable storage medium, storing a computer program or instructions, wherein when the instructions are run on a computer, the method according to any one of claims 1 to 13 is implemented, or the method according to any one of claims 14 to 22 is implemented, or the method according to any one of claims 23 to 31 is implemented.

40. A computer program product, comprising computer-executable instructions, wherein when the computer-executable instructions are run on a computer, the computer is enabled to perform the method according to any one of claims 1 to 13, or the method according to any one of claims 14 to 22, or the method according to any one of claims 23 to 31.
